# EUROPEAN PATENT APPLICATION

(11) **EP 2 879 345 A1**
(43) Date of publication of application: **03.06.2015**
(21) Application number: 13887587.7
(22) Date of filing: 30.08.2013
(51) Int. Cl.: H04L 29/06

(54) **METHOD FOR MULTIPLE TERMINALS TO PLAY MULTIMEDIA FILE COOPERATIVELY AND RELATED APPARATUS AND SYSTEM**

(71) Applicant: Huawei Technologies Co., Ltd., Longgang District Shenzhen, Guangdong 518129 (CN)
(72) Inventor: QUAN, Qi, Shenzhen Guangdong 518129 (CN)
(74) Representative: Thun, Clemens
(86) International application number: PCT/CN2013/082710
(87) International publication number: WO 2015/027480

(57) **Abstract**

A multi-terminal cooperative play method for a multimedia file, and a related apparatus and system are disclosed. A multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information.

## Description

### TECHNICAL FIELD

Embodiments of the present invention relate to the communications field, and in particular, to a multi-terminal cooperative play method for a multimedia file, and a related apparatus and system.

### BACKGROUND

With development of mobile communications technologies, currently, a mobile phone terminal can achieve a music play effect. An existing mobile phone terminal is integrated with music player software, which provides rich experience in both a play effect and a play interface function. However, current mobile phone terminals can only play music separately for their own, and cannot implement that multiple terminals jointly play same music at the same time; therefore the music play effect of the mobile phone terminal is only limited to a monaural play of a single mobile phone.

### SUMMARY

Embodiments of the present invention provide a multi-terminal cooperative play method for a multimedia file, and a related apparatus and system, which can achieve a stereo effect that multiple terminals play a multimedia file synchronously.

According to a first aspect, an embodiment of the present invention provides a multi-terminal cooperative play method for a multimedia file, including:
sending, by a master cooperative player, a cooperative play request to a play group management device;
receiving, by the master cooperative player, a cooperative play identifier and play position information that are sent by the play group management device according to the cooperative play request;
sending, by the master cooperative player, multimedia file information to the play group management device, so that a slave cooperative player joining a cooperative play according to the cooperative play identifier obtains the multimedia file information from the play group management device;
sending, by the master cooperative player, a play command to the slave cooperative player, where the play command includes start time of the cooperative play, so that the slave cooperative player plays, at the start time of the cooperative play and in a position that corresponds to play position information allocated to the slave cooperative player by the play group management device, a multimedia file corresponding to the multimedia file information; and
playing, by the master cooperative player at the start time of the cooperative play and in a position that corresponds to the play position information allocated to the master cooperative player by the play group management device, the multimedia file corresponding to the multimedia file information.

With reference to the first aspect, in a first possible implementation manner of the first aspect, the sending, by a master cooperative player, a cooperative play request to a play group management device includes:
sending, by the master cooperative player, the cooperative play request to an electronic service guide apparatus ESG, where the cooperative play request carries geographic position information of the master cooperative player, so that the ESG forwards the cooperative play request to the play group management device, and the play group management device allocates the cooperative play identifier and the play position information to the master cooperative player according to the geographic position information of the master cooperative player; and
the receiving, by the master cooperative player, a cooperative play identifier and play position information that are sent by the play group management device according to the cooperative play request includes:
   receiving, by the master cooperative player, the cooperative play identifier and the play position information that are forwarded by the ESG and are allocated to the master cooperative player by the play group management device.

With reference to the first aspect or the first possible implementation manner of the first aspect, in a second possible implementation manner of the first aspect, before the sending, by the master cooperative player, multimedia file information to the play group management device, the method further includes:
sending, by the master cooperative player, a multimedia file request to the ESG, where the multimedia file request carries an identity ID of the master cooperative player, so that the ESG forwards the multimedia file request to a content management system CMS, and the CMS generates, according to the ID of the master cooperative player, the multimedia file information and a download address of the multimedia file corresponding to the multimedia file information, where the CMS is configured to manage subscription relationships between a cooperative player and multimedia file and a download address corresponding to a subscribed multimedia file;
receiving, by the master cooperative player, the multimedia file information and the download address of the multimedia file corresponding to the multimedia file information that are forwarded to the ESG by the CMS; and
downloading, by the master cooperative player from the CMS according to the download address of the multimedia file corresponding to the multimedia file information, the multimedia file corresponding to the multimedia file information.

With reference to the first aspect or the first and second possible implementation manners of the first aspect, in a third possible implementation manner of the first aspect, before the sending, by the master cooperative player, a play command to the slave cooperative player, the method further includes:
performing, by the master cooperative player, clock synchronization with the slave cooperative player.

With reference to the third possible implementation manner of the first aspect, in a fourth possible implementation manner of the first aspect, the performing, by the master cooperative player, clock synchronization with the slave cooperative player includes:
synchronizing, by the master cooperative player, a clock of the master cooperative player to a network time protocol NTP server, so that when receiving a clock synchronization request sent by the slave cooperative player, the NTP server sends clock information of the NTP server to the slave cooperative player; or
sending, by the master cooperative player, clock information of the master cooperative player to the slave cooperative player by using a near field communication NFC chip, so that the slave cooperative player adjusts, according to the clock information of the master cooperative player, a clock of the slave cooperative player to be synchronized with a clock of the master cooperative player.

With reference to the first aspect or the first, second, third, and fourth possible implementation manners of the first aspect, in a fifth possible implementation manner of the first aspect, the master cooperative player sends the play command to an instant messaging IM server, so that the IM server forwards the play command to the slave cooperative player; or
the master cooperative player sends the play command to the slave cooperative player by using a short message service message.

With reference to the first aspect or the first, second, third, fourth, and fifth possible implementation manners of the first aspect, in a sixth possible implementation manner of the first aspect, after the receiving, by the master cooperative player, a cooperative play identifier and play position information that are sent by the play group management device according to the cooperative play request, the method further includes:
sending, by the master cooperative player, the cooperative play identifier to the slave cooperative player by using the NFC chip, so that the slave cooperative player joins the cooperative play according to the cooperative play identifier; or
sending, by the master cooperative player, the cooperative play identifier to the IM server, so that the IM server forwards the cooperative play identifier to the slave cooperative player.

With reference to the first aspect or the first, second, third, fourth, fifth, and sixth possible implementation manners of the first aspect, in a seventh possible implementation manner of the first aspect, the cooperative play request further carries display effect information, where the display effect information is used to cause the slave cooperative player to present a play and display effect corresponding to the display effect information; and
when playing the multimedia file corresponding to the multimedia file information, the master cooperative player further executes the following step:
presenting, by the master cooperative player, the play and display effect corresponding to the display effect information.

With reference to the first aspect or the first, second, third, fourth, fifth, sixth, and seventh possible implementation manners of the first aspect, in an eighth possible implementation manner of the first aspect, the cooperative play request further carries information of a play manner, where the play manner includes stereo play, stereo array play, and surround sound play.

With reference to the first aspect or the first, second, third, fourth, fifth, sixth, seventh, and eighth possible implementation manners of the first aspect, in a ninth possible implementation manner of the first aspect, the play position information includes relative play position information, where the relative play position information is information of a placement position of one cooperative player relative to another cooperative player participating in the cooperative play.

With reference to the first aspect or the first, second, third, fourth, fifth, sixth, seventh, eighth, and ninth possible implementation manners of the first aspect, in a tenth possible implementation manner of the first aspect, the multimedia file information includes a play list, where the play list includes identities IDs of multiple multimedia files that need to be played cooperatively; and
the play command further carries an ID of a multimedia file that is designated to play in the play list, and play time of the multimedia file that is designated to play.

According to a second aspect, an embodiment of the present invention provides another multi-terminal cooperative play method for a multimedia file, including:
allocating, by a play group management device, a cooperative play identifier and play position information to a master cooperative player according to a cooperative play request sent by the master cooperative player;
sending, by the play group management device to the master cooperative player, the cooperative play identifier and the play position information that are allocated to the master cooperative player;
allocating, by the play group management device, play position information to a slave cooperative player according to a cooperative play joining request sent by the slave cooperative player, where the cooperative play joining request carries a cooperative play identifier of a play group that the slave cooperative player needs to join;
sending, by the play group management device to the slave cooperative player, the play position information allocated to the slave cooperative player;
receiving, by the play group management device, multimedia file information sent by the master cooperative player; and
sending, by the play group management device, the multimedia file information to the slave cooperative player, so that the slave cooperative player obtains a multimedia file corresponding to the multimedia file information.

With reference to the second aspect, in a first possible implementation manner of the second aspect, before the allocating, by a play group management device, a cooperative play identifier and play position information to a master cooperative player according to a cooperative play request sent by the master cooperative player, the method further includes:
receiving, by the play group management device, the cooperative play request forwarded by an electronic service guide apparatus ESG, where the cooperative play request is sent to the ESG by the master cooperative player, and the cooperative play request carries geographic position information of the master cooperative player;
the allocating, by a play group management device, a cooperative play identifier and play position information to a master cooperative player according to a cooperative play request sent by the master cooperative player is specifically:
   allocating, by the play group management device, the cooperative play identifier and the play position information to the master cooperative player according to the geographic position information of the master cooperative player; and
   the sending, by the play group management device to the master cooperative player, the cooperative play identifier and the play position information that are allocated to the master cooperative player includes:
      sending, by the play group management device to the ESG, the cooperative play identifier and the play position information that are allocated to the master cooperative player, so that the ESG forwards, to the master cooperative player, the cooperative play identifier and the play position information that are allocated to the master cooperative player.

With reference to the second aspect or the first possible implementation manner of the second aspect, in a second possible implementation manner of the second aspect, the cooperative play joining request carries geographic position information of the slave cooperative player, and the allocating, by the play group management device, play position information to a slave cooperative player according to a cooperative play joining request sent by the slave cooperative player includes:
allocating, by the play group management device to the slave cooperative player according to the geographic position information of the slave cooperative player, play position information that corresponds to a play manner selected by the master cooperative player.

With reference to the second aspect or the first and second possible implementation manners of the second aspect, in a third possible implementation manner of the second aspect, if the cooperative play request further carries display effect information, after the allocating, by the play group management device, play position information to a slave cooperative player according to a cooperative play joining request sent by the slave cooperative player, the method further includes:
sending, by the play group management device, the display effect information to the slave cooperative player, so that the slave cooperative player presents a play and display effect corresponding to the display effect information.

With reference to the second aspect or the first, second, and third possible implementation manners of the second aspect, in a fourth possible implementation manner of the second aspect, if the cooperative play request further carries information of a play manner, where the play manner includes stereo play, stereo array play, and surround sound play,
after the allocating, by the play group management device, play position information to a slave cooperative player according to a cooperative play joining request sent by the slave cooperative player, the method further includes:
sending, by the play group management device, the information of the play manner to the slave cooperative player, so that the slave cooperative player plays the multimedia file according to the play manner selected by the master cooperative player.

With reference to the second aspect or the first, second, third, and fourth possible implementation manners of the second aspect, in a fifth possible implementation manner of the second aspect, the play position information of the master cooperative player includes relative play position information, where the relative play position information is information of a placement position of one cooperative player relative to another cooperative player participating in the cooperative play.

According to a third aspect, an embodiment of the present invention provides another multi-terminal cooperative play method for a multimedia file, including:
obtaining, by a slave cooperative player, a cooperative play identifier that is allocated to a master cooperative player by a play group management device;
sending, by the slave cooperative player, a cooperative play joining request to the play group management device according to the cooperative play identifier, where the cooperative play joining request carries a cooperative play identifier of a play group that the slave cooperative player needs to join;
receiving, by the slave cooperative player, play position information that is sent by the play group management device according to the cooperative play joining request;
receiving, by the slave cooperative player, multimedia file information sent by the play group management device;
receiving, by the slave cooperative player, a play command sent by the master cooperative player, where the play command includes start time of a cooperative play; and
playing, by the slave cooperative player at the start time of the cooperative play and in a position that corresponds to the play position information allocated to the slave cooperative player by the play group management device, a multimedia file corresponding to the multimedia file information.

With reference to the third aspect, in a first possible implementation manner of the third aspect, the obtaining, by a slave cooperative player, a cooperative play identifier that is allocated to a master cooperative player by a play group management device includes:
receiving, by the slave cooperative player by using a near field communication NFC chip, the cooperative play identifier sent by the master cooperative player; or
receiving, by the slave cooperative player, the cooperative play identifier sent by an instant messaging IM server, where the cooperative play identifier is sent to the IM server by the master cooperative player.

With reference to the third aspect or the first possible implementation manner of the third aspect, in a second possible implementation manner of the third aspect, the sending, by the slave cooperative player, a cooperative play joining request to the play group management device according to the cooperative play identifier includes:
sending, by the slave cooperative player, the cooperative play joining request to an ESG, where the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player; and
the receiving, by the slave cooperative player, play position information that is sent by the play group management device according to the cooperative play joining request includes:
   receiving, by the slave cooperative player, the play position information that is forwarded by the ESG and is allocated to the slave cooperative player by the play group management device.

With reference to the third aspect or the first and second possible implementation manners of the third aspect, in a third possible implementation manner of the third aspect, after the receiving, by the slave cooperative player, multimedia file information sent by the play group management device, the method further includes:
obtaining, by the slave cooperative player from the multimedia file information, a download address of the multimedia file corresponding to the multimedia file information; and
downloading, by the slave cooperative player from a content management system CMS according to the download address of the multimedia file, the multimedia file corresponding to the download address, where the CMS is configured to manage multimedia file subscription relationships of cooperative players and a download address corresponding to a subscribed multimedia file.

With reference to the third aspect or the first, second, and third possible implementation manners of the third aspect, in a fourth possible implementation manner of the third aspect, the receiving, by the slave cooperative player, a play command sent by the master cooperative player includes:
receiving, by the slave cooperative player, the play command from the IM server, where the play command is sent to the IM server by the master cooperative player; or
receiving, by the slave cooperative player by using a short message service message, the play command sent by the master cooperative player.

With reference to the third aspect or the first, second, third, and fourth possible implementation manners of the third aspect, in a fifth possible implementation manner of the third aspect, before the receiving, by the slave cooperative player, a play command sent by the master cooperative player, the method further includes:
performing, by the slave cooperative player, clock synchronization with the master cooperative player.

With reference to the fifth possible implementation manner of the third aspect, in a sixth possible implementation manner of the third aspect, the performing, by the slave cooperative player, clock synchronization with the master cooperative player includes:
sending, by the slave cooperative player, a clock synchronization request to a network time protocol NTP server, receiving clock information of the NTP server sent by the NTP server, and adjusting a clock of the slave cooperative player according to the clock information of the NTP server; or
receiving, by the slave cooperative player by using the NFC chip, clock information sent by the master cooperative player, and adjusting, by the slave cooperative player according to the clock information of the master cooperative player, a clock of the slave cooperative player to be synchronized with a clock of the master cooperative player.

With reference to the third aspect or the first, second, third, fourth, fifth, and sixth possible implementation manners of the third aspect, in a seventh possible implementation manner of the third aspect, if the cooperative play request further carries display effect information, after the receiving, by the slave cooperative player, play position information that is sent by the play group management device according to the cooperative play joining request, the method further includes:
receiving, by the slave cooperative player, the display effect information sent by the play group management device, so that the slave cooperative player presents a play and display effect corresponding to the display effect information.

With reference to the third aspect or the first, second, third, fourth, fifth, sixth, and seventh possible implementation manners of the third aspect, in an eighth possible implementation manner of the third aspect, if the cooperative play request further carries information of a play manner, where the play manner includes stereo play, stereo array play, and surround sound play,
after the receiving, by the slave cooperative player, play position information that is sent by the play group management device according to the cooperative play joining request, the method further includes:
receiving, by the slave cooperative player, the information of the play manner sent by the play group management device, so that the slave cooperative player plays the multimedia file according to a play manner selected by the master cooperative player.

According to a fourth aspect, an embodiment of the present invention provides a master cooperative player, which is applied to a multi-terminal cooperative play system and includes:
a request sending module, configured to send a cooperative play request to a play group management device;
a receiving module, configured to receive a cooperative play identifier and play position information that are sent by the play group management device according to the cooperative play request;
a file information sending module, configured to send multimedia file information to the play group management device, so that a slave cooperative player joining a cooperative play according to the cooperative play identifier obtains the multimedia file information from the play group management device;
a command sending module, configured to send a play command to the slave cooperative player, where the play command includes start time of the cooperative play, so that the slave cooperative player plays, at the start time of the cooperative play and in a position that corresponds to play position information allocated to the slave cooperative player by the play group management device, a multimedia file corresponding to the multimedia file information; and
a cooperative play module, configured to play, at the start time of the cooperative play and in a position that corresponds to the play position information allocated to the master cooperative player by the play group management device, the multimedia file corresponding to the multimedia file information.

With reference to the fourth aspect, in a first possible implementation manner of the fourth aspect, the request sending module is specifically configured to send the cooperative play request to an electronic service guide apparatus ESG, where the cooperative play request carries geographic position information of the master cooperative player, so that the ESG forwards the cooperative play request to the play group management device, and the play group management device allocates the cooperative play identifier and the play position information to the master cooperative player according to the geographic position information of the master cooperative player; and
the receiving module is specifically configured to receive the cooperative play identifier and the play position information that are forwarded by the ESG and are allocated to the master cooperative player by the play group management device.

With reference to the fourth aspect or the first possible implementation manner of the fourth aspect, in a second possible implementation manner of the fourth aspect, the master cooperative player further includes:
a file request sending module, configured to send a multimedia file request to the ESG, where the multimedia file request carries an identity ID of the master cooperative player, so that the ESG forwards the multimedia file request to a content management system CMS, and the CMS generates, according to the ID of the master cooperative player, the multimedia file information and a download address of the multimedia file corresponding to the multimedia file information, where the CMS is configured to manage multimedia file subscription relationships of cooperative players and a download address corresponding to a subscribed multimedia file;
a download address receiving module, configured to receive the multimedia file information and the download address of the multimedia file corresponding to the multimedia file information that are forwarded to the ESG by the CMS; and
a file downloading module, configured to download, from the CMS according to the download address of the multimedia file corresponding to the multimedia file information, the multimedia file corresponding to the multimedia file information.

With reference to the fourth aspect or the first and second possible implementation manners of the fourth aspect, in a third possible implementation manner of the fourth aspect, the master cooperative player further includes:
a clock synchronization module, configured to maintain clock synchronization between the master cooperative player and the slave cooperative player.

With reference to the third possible implementation manner of the fourth aspect, in a fourth possible implementation manner of the fourth aspect, the clock synchronization module is specifically configured to synchronize a clock of the master cooperative player to a network time protocol NTP server, so that when receiving a clock synchronization request sent by the slave cooperative player, the NTP server sends clock information of the NTP server to the slave cooperative player; or send clock information of the master cooperative player to the slave cooperative player by using a near field communication NFC chip, so that the slave cooperative player adjusts, according to the clock information, a clock of the slave cooperative player to be synchronized with a clock of the master cooperative player.

With reference to the fourth aspect or the first, second, third, and fourth possible implementation manners of the fourth aspect, in a fifth possible implementation manner of the fourth aspect, the command sending module is specifically configured to send the play command to an instant messaging IM server, so that the IM server forwards the play command to the slave cooperative player; or send the play command to the slave cooperative player by using a short message service message.

With reference to the fourth aspect or the first, second, third, fourth, and fifth possible implementation manners of the fourth aspect, in a sixth possible implementation manner of the fourth aspect, the master cooperative player further includes:
an identifier forwarding module, configured to send the cooperative play identifier to the slave cooperative player by using the NFC chip, so that the slave cooperative player joins the cooperative play according to the cooperative play identifier; or send the cooperative play identifier to the IM server, so that the IM server forwards the cooperative play identifier to the slave cooperative player.

With reference to the fourth aspect or the first, second, third, fourth, fifth, and sixth possible implementation manners of the fourth aspect, in a seventh possible implementation manner of the fourth aspect, the cooperative play request further carries display effect information, where the display effect information is used to cause the slave cooperative player to present a play and display effect corresponding to the display effect information; and
the cooperative play module is further configured to: when displaying the multimedia file corresponding to the multimedia file information, present the play and display effect corresponding to the display effect information.

According to a fifth aspect, an embodiment of the present invention provides a play group management device, which is applied to a multi-terminal cooperative play system and includes:
a master cooperative allocation module, configured to allocate a cooperative play identifier and play position information to a master cooperative player according to a cooperative play request sent by the master cooperative player;
a master cooperative sending module, configured to send, to the master cooperative player, the cooperative play identifier and the play position information that are allocated to the master cooperative player;
a slave cooperative allocation module, configured to allocate play position information to a slave cooperative player according to a cooperative play joining request sent by the slave cooperative player, where the cooperative play joining request carries a cooperative play identifier of a play group that the slave cooperative player needs to join;
a slave cooperative sending module, configured to send, to the slave cooperative player, the play position information allocated to the slave cooperative player;
a file information receiving module, configured to receive multimedia file information sent by the master cooperative player; and
a file information forwarding module, configured to send the multimedia file information to the slave cooperative player, so that the slave cooperative player obtains a multimedia file corresponding to the multimedia file information.

With reference to the fifth aspect, in a first possible implementation manner of the fifth aspect, the play group management device further includes: a request receiving module, configured to receive the cooperative play request forwarded by an electronic service guide apparatus ESG, where the cooperative play request is sent to the ESG by the master cooperative player, and the cooperative play request carries geographic position information of the master cooperative player, where
the master cooperative allocation module is specifically configured to allocate the cooperative play identifier and the play position information to the master cooperative player according to the geographic position information of the master cooperative player; and
the master cooperative sending module is specifically configured to send, to the ESG, the cooperative play identifier and the play position information that are allocated to the master cooperative player, so that the ESG forwards, to the master cooperative player, the cooperative play identifier and the play position information that are allocated to the master cooperative player.

With reference to the fifth aspect or the first possible implementation manner of the fifth aspect, in a second possible implementation manner of the fifth aspect, the cooperative play joining request carries geographic position information of the slave cooperative player, and the slave cooperative allocation module is specifically configured to allocate, to the slave cooperative player according to the geographic position information of the slave cooperative player, play position information that corresponds to a play manner selected by the master cooperative player.

With reference to the fifth aspect or the first and second possible implementation manners of the fifth aspect, in a third possible implementation manner of the fifth aspect, the cooperative play request further carries display effect information; and
the play group management device further includes:
an effect information forwarding module, configured to send the display effect information to the slave cooperative player, so that the slave cooperative player presents a play and display effect corresponding to the display effect information.

With reference to the fifth aspect or the first, second, and third possible implementation manners of the fifth aspect, in a fourth possible implementation manner of the fifth aspect, the cooperative play request further carries information of a play manner, where the play manner includes stereo play, stereo array play, and surround sound play; and
the play group management device further includes:
a manner information forwarding module, configured to send the information of the play manner to the slave cooperative player, so that the slave cooperative player plays the multimedia file according to a play manner selected by the master cooperative player.

According to a sixth aspect, an embodiment of the present invention provides a slave cooperative player, which is applied to a multi-terminal cooperative play system and includes:
an identifier obtaining module, configured to obtain, by the slave cooperative player, a cooperative play identifier that is allocated to a master cooperative player by a play group management device;
a request sending module, configured to send a cooperative play joining request to the play group management device according to the cooperative play identifier, where the cooperative play joining request carries a cooperative play identifier of a play group that the slave cooperative player needs to join;
a position information receiving module, configured to receive play position information that is sent by the play group management device according to the cooperative play joining request;
a file information receiving module, configured to receive multimedia file information sent by the play group management device;
a command receiving module, configured to receive a play command sent by the master cooperative player, where the play command includes start time of a cooperative play; and
a cooperative play module, configured to play, by the slave cooperative player at the start time of the cooperative play and in a position that corresponds to the play position information allocated to the slave cooperative player by the play group management device, a multimedia file corresponding to the multimedia file information.

With reference to the sixth aspect, in a first possible implementation manner of the sixth aspect, the identifier obtaining module is specifically configured to receive, by using an NFC chip, the cooperative play identifier sent by the master cooperative player; or receive the cooperative play identifier sent by an instant messaging IM server, where the cooperative play identifier is sent to the IM server by the master cooperative player.

With reference to the sixth aspect or the first possible implementation manner of the sixth aspect, in a second possible implementation manner of the sixth aspect, the request sending module is specifically configured to send the cooperative play joining request to an ESG, where the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player; and
the position information receiving module is specifically configured to receive the play position information that is forwarded by the ESG and is allocated to the slave cooperative player by the play group management device.

With reference to the sixth aspect or the first and second possible implementation manners of the sixth aspect, in a third possible implementation manner of the sixth aspect, the slave cooperative player further includes:
a download address obtaining module, configured to obtain, from the multimedia file information, a download address of the multimedia file corresponding to the multimedia file information; and
a file downloading module, configured to download, from a content management system CMS according to the download address of the multimedia file, the multimedia file corresponding to the download address, where the CMS is configured to manage multimedia file subscription relationships of cooperative players and a download address corresponding to a subscribed multimedia file.

With reference to the sixth aspect or the first, second, and third possible implementation manners of the sixth aspect, in a fourth possible implementation manner of the sixth aspect, the command receiving module is specifically configured to receive the play command from the IM server, where the play command is sent to the IM server by the master cooperative player; or receive, by using a short message service message, the play command sent by the master cooperative player.

With reference to the sixth aspect or the first, second, third, and fourth possible implementation manners of the sixth aspect, in a fifth possible implementation manner of the sixth aspect, the slave cooperative player further includes: a clock synchronization module, configured to enable the slave cooperative player to perform clock synchronization with the master cooperative player.

With reference to the fifth possible implementation manner of the sixth aspect, in a sixth possible implementation manner of the sixth aspect, the clock synchronization module is further configured to send a clock synchronization request to a network time protocol NTP server, receive clock information of the NTP server sent by the NTP server, and adjust a clock of the slave cooperative player according to the clock information of the NTP server; or receive, by using the NFC chip, clock information sent by the master cooperative player, and adjust, according to the clock information of the master cooperative player, a clock of the slave cooperative player to be synchronized with a clock of the master cooperative player.

With reference to the sixth aspect or the first, second, third, fourth, fifth, and sixth possible implementation manners of the sixth aspect, in a seventh possible implementation manner of the sixth aspect, the cooperative play request further carries display effect information; and
the slave cooperative player further includes: an effect information receiving module, configured to receive the display effect information sent by the play group management device, so that the slave cooperative player presents a play and display effect corresponding to the display effect information.

With reference to the sixth aspect or the first, second, third, fourth, fifth, sixth, and seventh possible implementation manners of the sixth aspect, in an eighth possible implementation manner of the sixth aspect, the cooperative play request further carries information of a play manner, where the play manner includes stereo play, stereo array play, and surround sound play; and
the slave cooperative player further includes: a manner information receiving module, configured to receive the information of the play manner sent by the play group management device, so that the slave cooperative player plays the multimedia file according to a play manner selected by the master cooperative player.

According to a seventh aspect, an embodiment of the present invention provides a multi-terminal cooperative play system, where the system includes: the master cooperative player according to any possible implementation manner of the fourth aspect, the play group management device according to the fifth aspect, and at least one slave cooperative player according to the sixth aspect.

According to an eighth aspect, an embodiment of the present invention provides another master cooperative player, which is applied to a multi-terminal cooperative play system and includes: an input apparatus, an output apparatus, a memory, and a processor, where
the input apparatus is configured to receive input information of a user;
the output apparatus is configured to present output information under control of the processor;
the memory is configured to store user data and program code; and
the master cooperative player further includes:
a sender, configured to send a cooperative play request to a play group management device under control of the processor; and
a receiver, configured to receive, under control of the processor, a cooperative play identifier and play position information that are sent by the play group management device according to the cooperative play request, where
the sender is further configured to send multimedia file information to the play group management device under control of the processor, so that a slave cooperative player joining a cooperative play according to the cooperative play identifier obtains the multimedia file information from the play group management device;
the sender is further configured to send a play command to the slave cooperative player under control of the processor, where the play command includes start time of the cooperative play, so that the slave cooperative player plays, at the start time of the cooperative play and in a position that corresponds to play position information allocated to the slave cooperative player by the play group management device, a multimedia file corresponding to the multimedia file information; and
the processor is configured to execute the program code stored in the memory, so as to decode, at the start time of the cooperative play, the multimedia file corresponding to the multimedia file information to generate decoded information; and control the output apparatus to play, according to the decoded information and in a position that corresponds to the play position information allocated to the master cooperative player by the play group management device, the multimedia file corresponding to the multimedia file information.

According to a ninth aspect, an embodiment of the present invention provides another play group management device, which is applied to a multi-terminal cooperative play system and includes a memory and a processor, where
the memory is configured to store data and program code;
the processor is configured to execute the program code stored in the memory; and
when executing the program code, the processor is specifically configured to execute the following steps:
allocating a cooperative play identifier and play position information to a master cooperative player according to a cooperative play request sent by the master cooperative player;
sending, to the master cooperative player, the cooperative play identifier and the play position information that are allocated to the master cooperative player;
allocating play position information to a slave cooperative player according to a cooperative play joining request sent by the slave cooperative player, where the cooperative play joining request carries a cooperative play identifier of a play group that the slave cooperative player needs to join;
sending, to the slave cooperative player, the play position information allocated to the slave cooperative player;
receiving multimedia file information sent by the master cooperative player; and
sending the multimedia file information to the slave cooperative player, so that the slave cooperative player obtains a multimedia file corresponding to the multimedia file information.

According to a tenth aspect, an embodiment of the present invention provides a slave cooperative player, which is applied to a multi-terminal cooperative play system and includes an input apparatus, an output apparatus, a memory, and a processor, where
the input apparatus is configured to receive input information of a user;
the output apparatus is configured to present output information under control of the processor;
the memory is configured to store user data and program code; and
the slave cooperative player further includes: a sender and a receiver, where
the receiver is configured to obtain a cooperative play identifier allocated to a master cooperative player by a play group management device;
the sender is configured to send, under control of the processor and according to the cooperative play identifier, a cooperative play joining request to the play group management device, where the cooperative play joining request carries a cooperative play identifier of a play group that the slave cooperative player needs to join;
the receiver is further configured to receive, under control of the processor, play position information that is sent by the play group management device according to the cooperative play joining request, receive, under control of the processor, multimedia file information sent by the play group management device, and receive a play command sent by the master cooperative player, where the play command includes start time of a cooperative play; and
the processor is configured to execute the program code stored in the memory, so as to decode, at the start time of the cooperative play, a multimedia file corresponding to the multimedia file information to generate decoded information; and control the output apparatus to play, according to the decoded information and in a position that corresponds to play position information allocated to the slave cooperative player by the play group management device, the multimedia file corresponding to the multimedia file information.

As can be seen from the foregoing technical solutions, the embodiments of the present invention have the following advantages:

In the embodiments of the present invention, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

### BRIEF DESCRIPTION OF DRAWINGS

FIG. 1 is a schematic diagram of a system architecture of a multi-terminal cooperative play system according to an embodiment of the present invention;
FIG. 2 is a schematic block diagram of a procedure of a multi-terminal cooperative play method for a multimedia file according to an embodiment of the present invention;
FIG. 3-a is a schematic diagram of a stereo play formed by two mobile phone terminals according to an embodiment of the present invention;

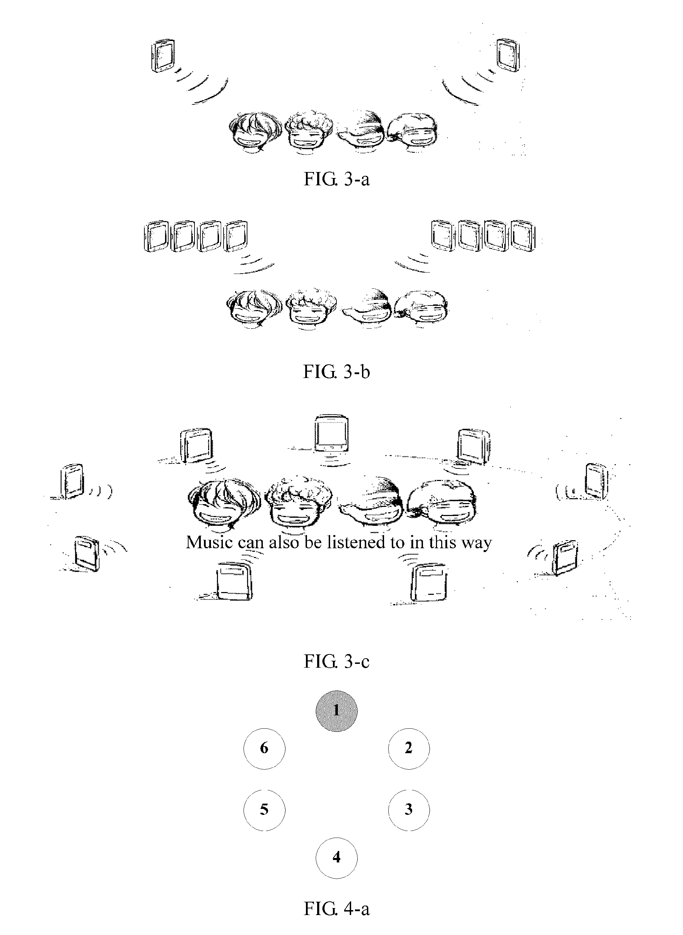

FIG. 3-b is a schematic diagram of a stereo array play formed by multiple mobile phone terminals according to an embodiment of the present invention;
FIG. 3-c is a schematic diagram of a surround sound play formed by multiple mobile phone terminals according to an embodiment of the present invention;

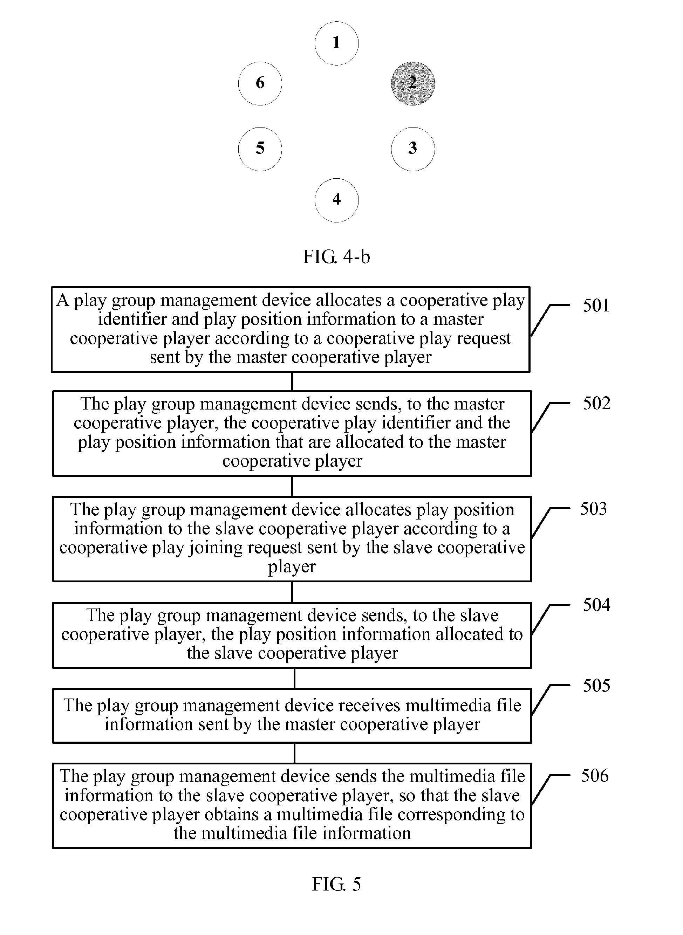

FIG. 4-a is a schematic diagram of relative play position allocation in a surround sound play mode according to an embodiment of the present invention;
FIG. 4-b is a schematic diagram of relative play position allocation in another surround sound play mode according to an embodiment of the present invention;
FIG. 5 is a schematic block diagram of a procedure of another multi-terminal cooperative play method for a multimedia file according to an embodiment of the present invention;

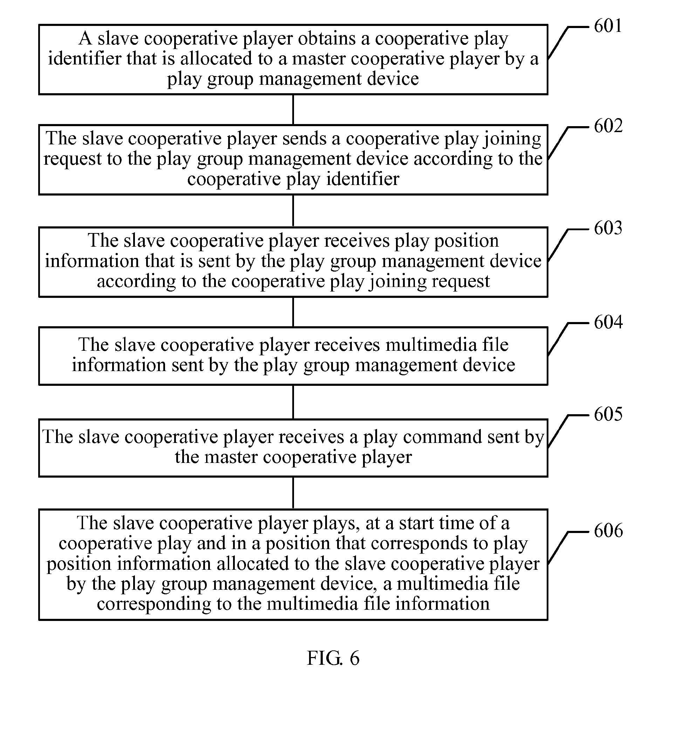

FIG. 6 is a schematic block diagram of a procedure of another multi-terminal cooperative play method for a multimedia file according to an embodiment of the present invention;

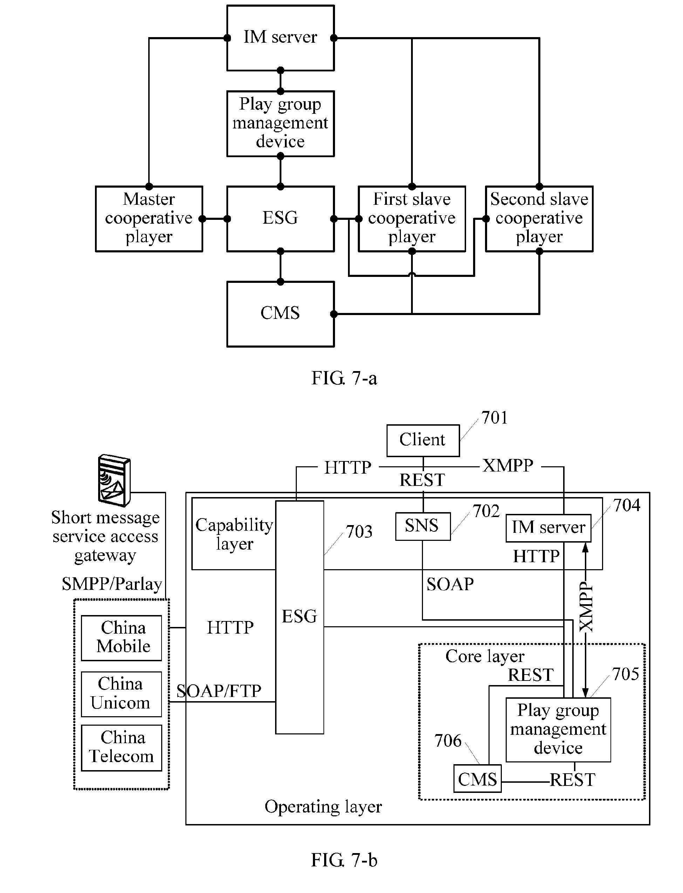

FIG. 7-a is a schematic diagram of a system architecture of another multi-terminal cooperative play system according to an embodiment of the present invention;
FIG. 7-b is a schematic structural diagram of a multi-terminal cooperative play system according to an embodiment of the present invention;

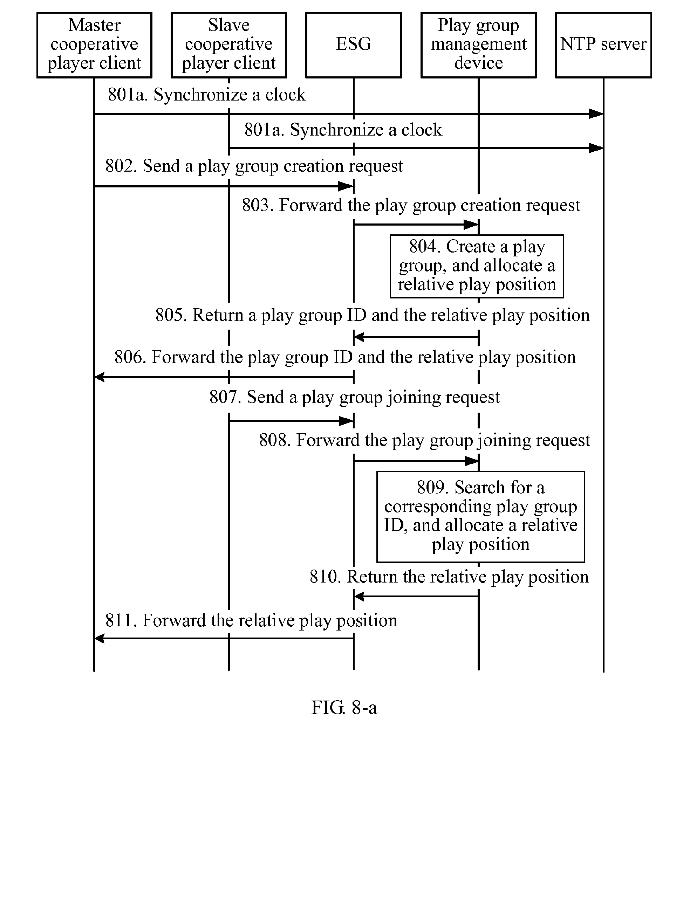

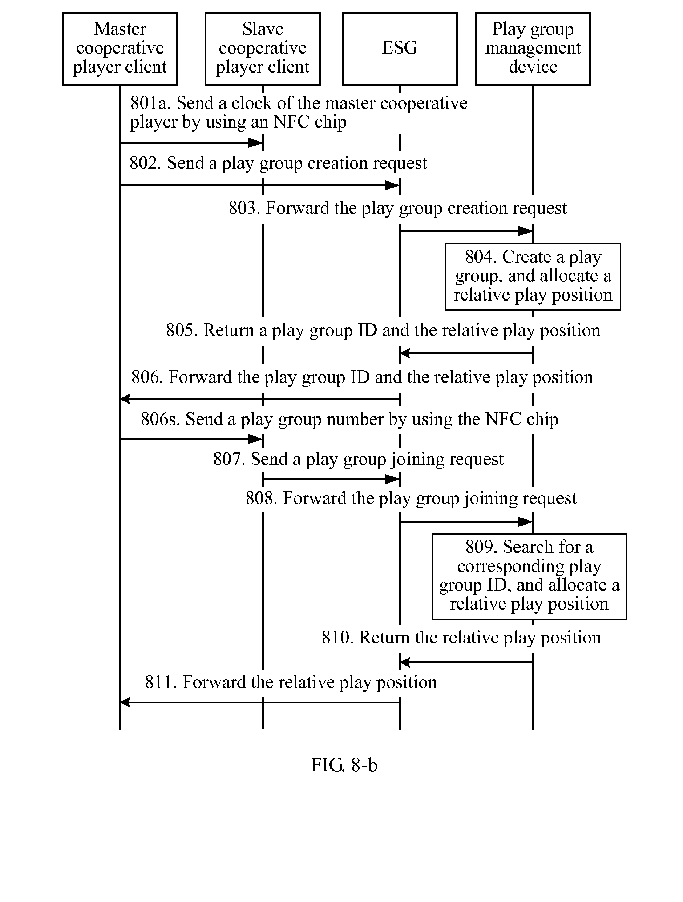

FIG. 8-a is a schematic diagram of a specific procedure of establishing a multi-terminal play group according to an embodiment of the present invention;
FIG. 8-b is a schematic diagram of another specific procedure of establishing a multi-terminal play group according to an embodiment of the present invention;

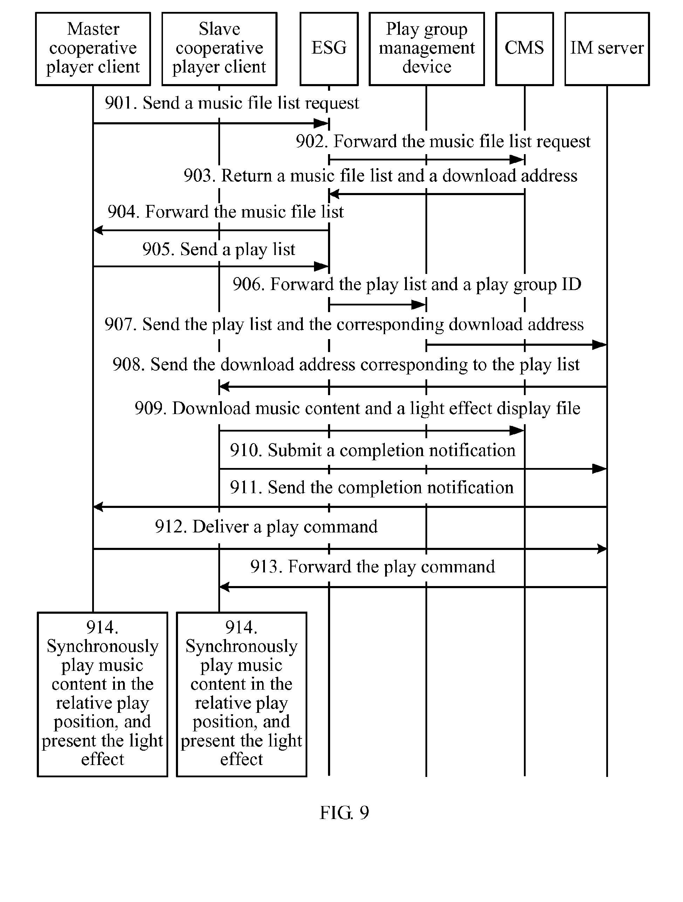

FIG. 9 is a schematic diagram of a specific procedure of implementing a cooperative play of a music file in a play group according to an embodiment of the present invention;

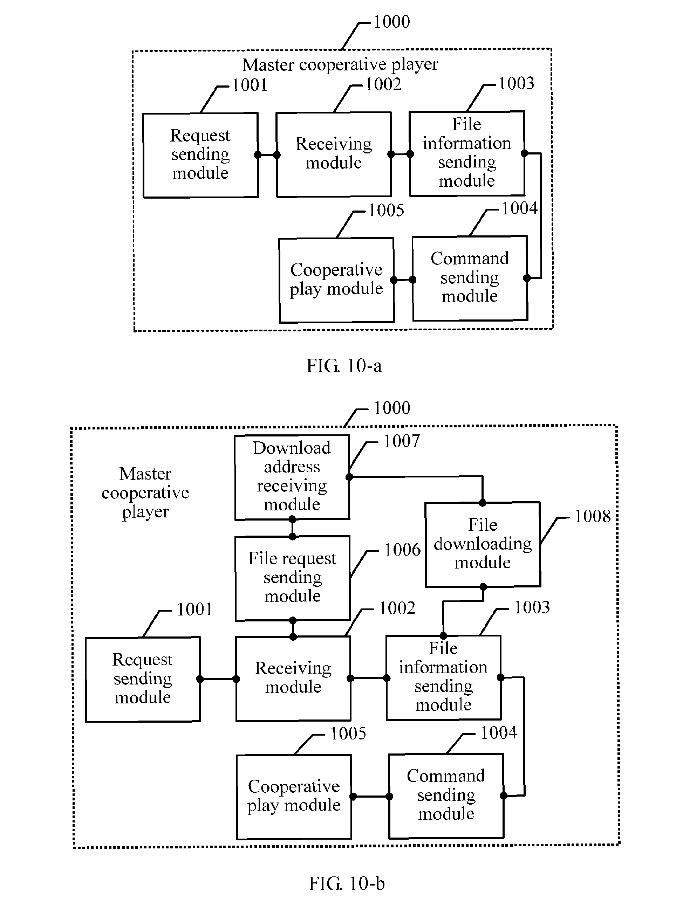

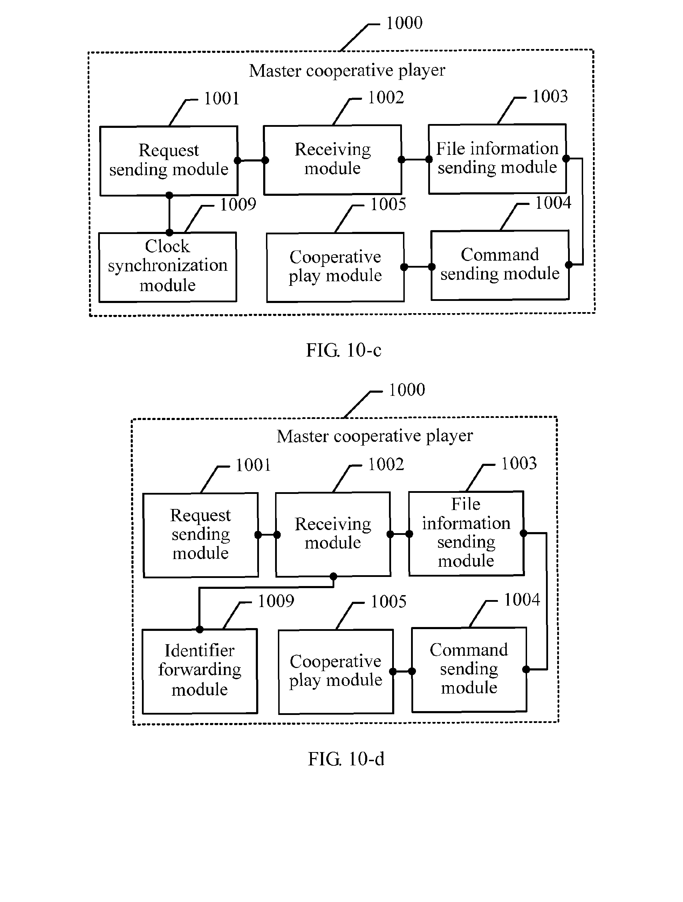

FIG. 10-a is a schematic structural diagram of a master cooperative player according to an embodiment of the present invention, which is applied to a multi-terminal cooperative play system;
FIG. 10-b is a schematic structural diagram of another master cooperative player according to an embodiment of the present invention, which is applied to a multi-terminal cooperative play system;
FIG. 10-c is a schematic structural diagram of another master cooperative player according to an embodiment of the present invention, which is applied to a multi-terminal cooperative play system;
FIG. 10-d is a schematic structural diagram of another master cooperative player according to an embodiment of the present invention, which is applied to a multi-terminal cooperative play system;

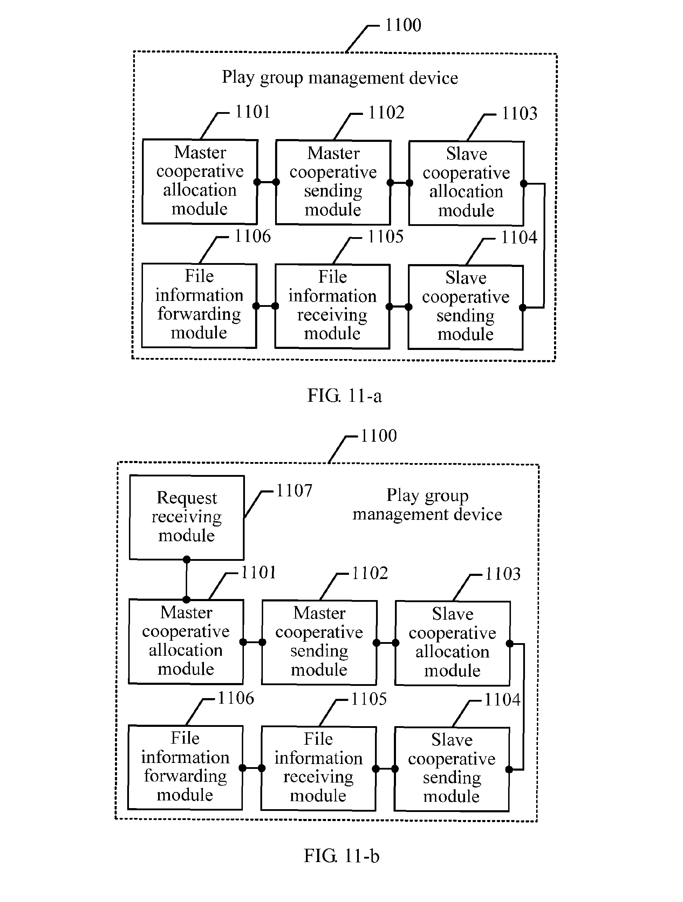

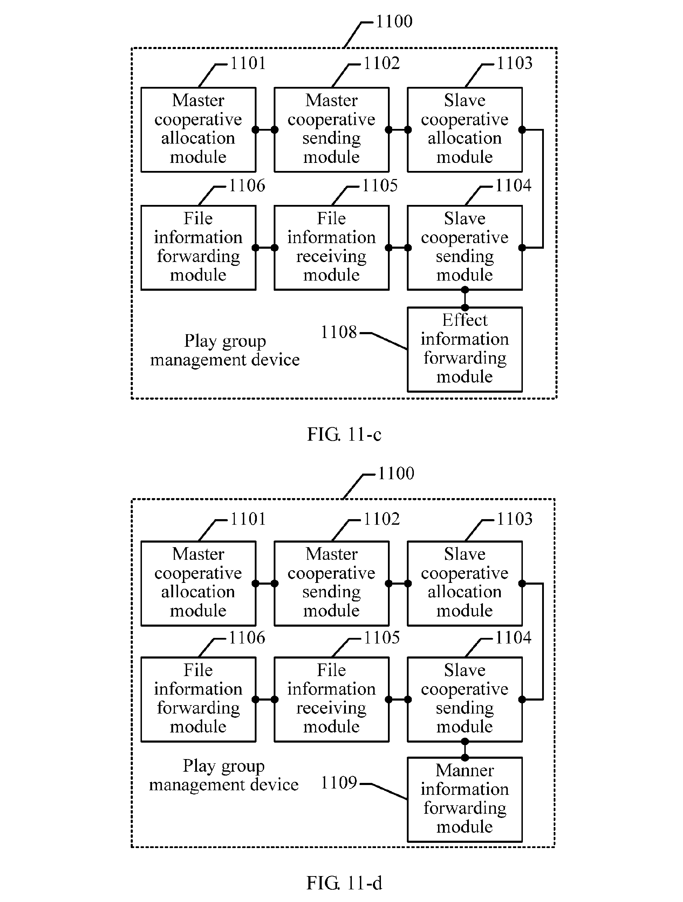

FIG. 11-a is a schematic structural diagram of a play group management device according to an embodiment of the present invention;
FIG. 11-b is a schematic structural diagram of another play group management device according to an embodiment of the present invention;
FIG. 11-c is a schematic structural diagram of another play group management device according to an embodiment of the present invention;
FIG. 11-d is a schematic structural diagram of another play group management device according to an embodiment of the present invention;

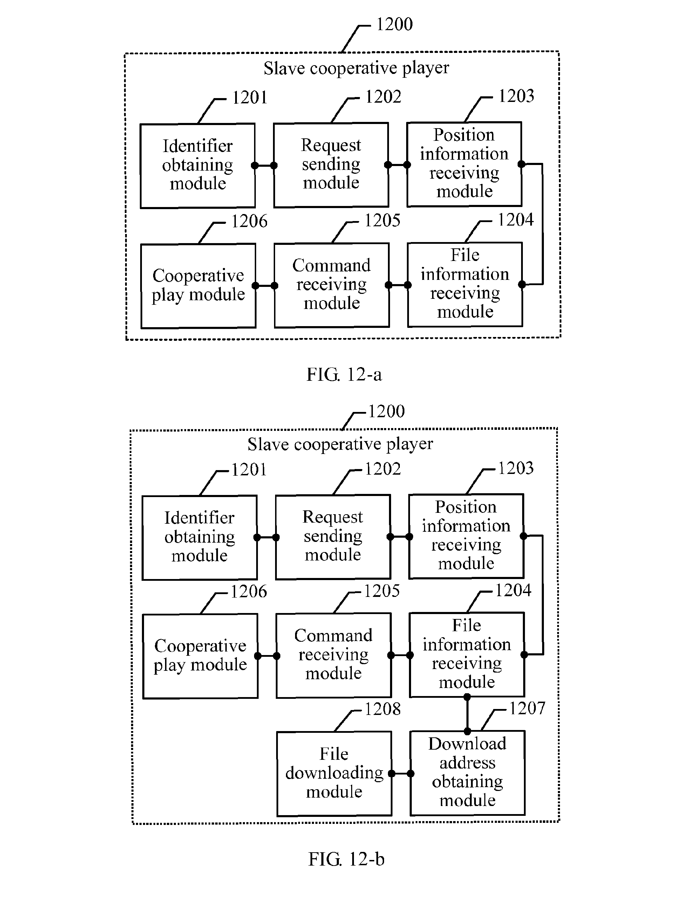

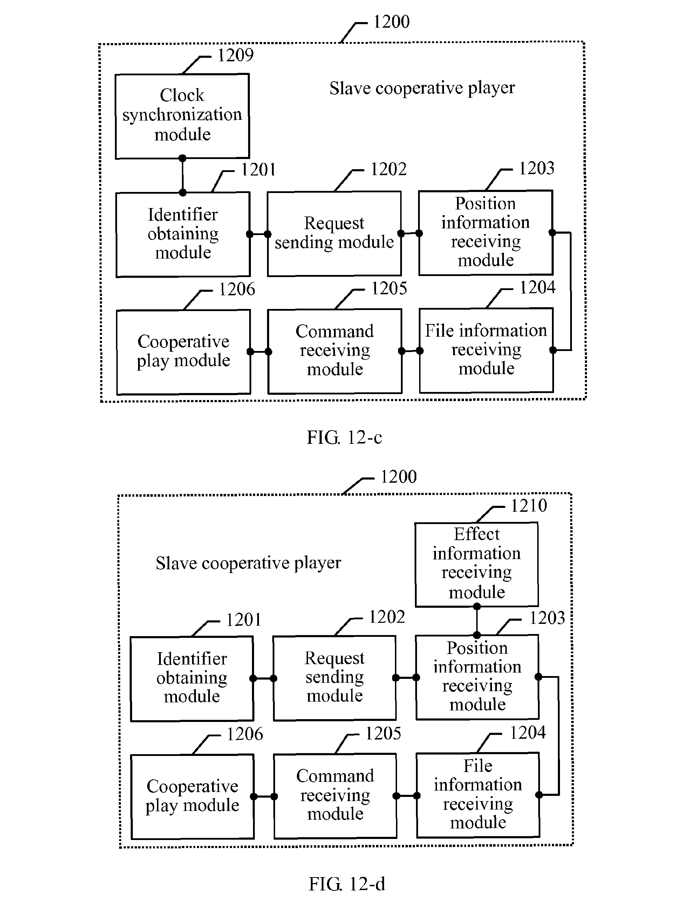

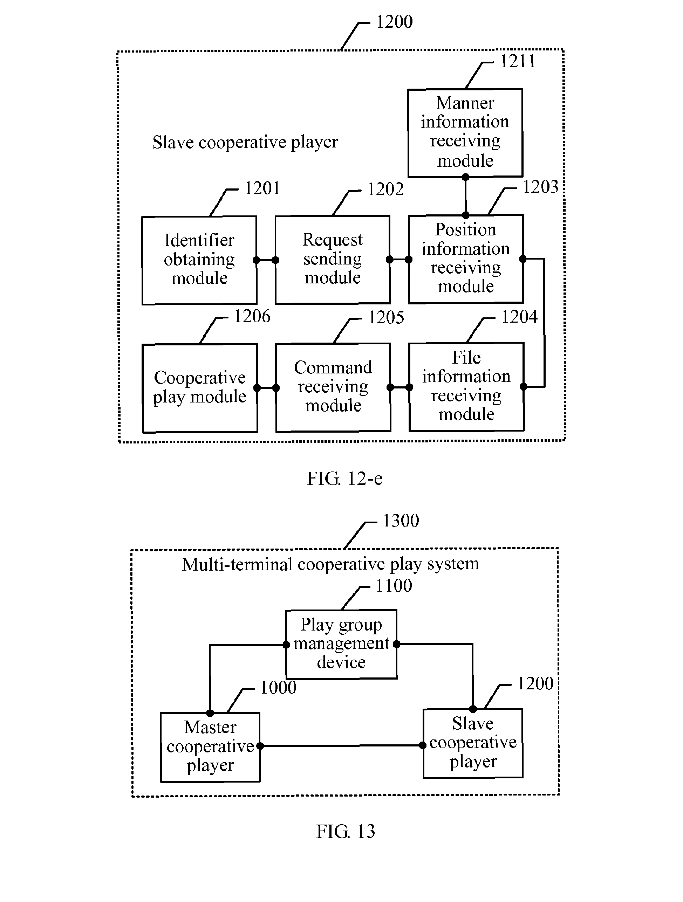

FIG. 12-a is a schematic structural diagram of a slave cooperative player according to an embodiment of the present invention, which is applied to a multi-terminal cooperative play system;
FIG. 12-b is a schematic structural diagram of another slave cooperative player according to an embodiment of the present invention, which is applied to a multi-terminal cooperative play system;
FIG. 12-c is a schematic structural diagram of another slave cooperative player according to an embodiment of the present invention, which is applied to a multi-terminal cooperative play system;
FIG. 12-d is a schematic structural diagram of another slave cooperative player according to an embodiment of the present invention, which is applied to a multi-terminal cooperative play system;
FIG. 12-e is a schematic structural diagram of another slave cooperative player according to an embodiment of the present invention, which is applied to a multi-terminal cooperative play system;
FIG. 13 is a schematic structural diagram of another multi-terminal cooperative play system according to an embodiment of the present invention;

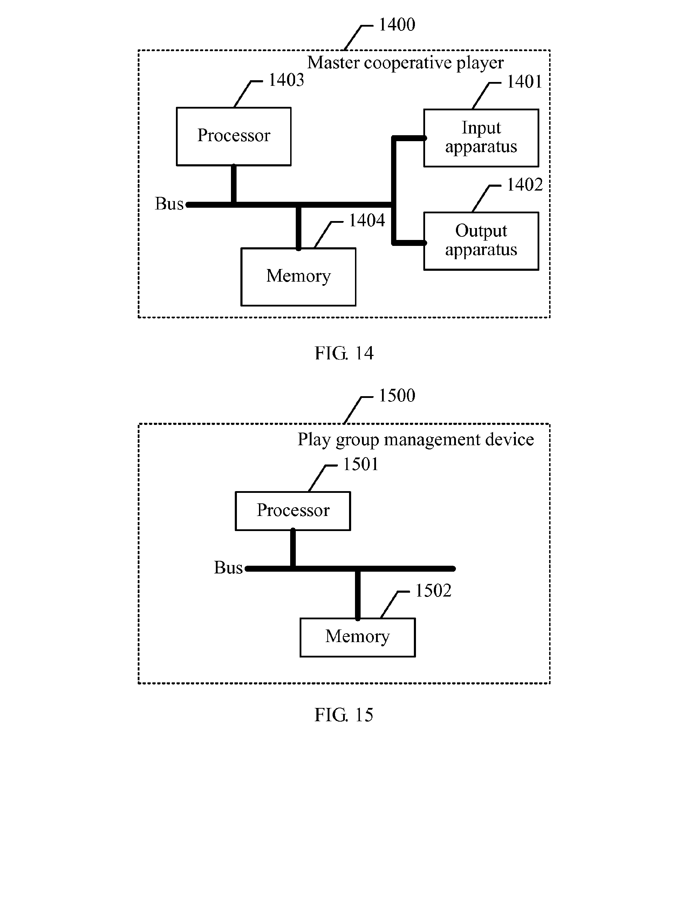

FIG. 14 is a schematic structural diagram of another master cooperative player according to an embodiment of the present invention, which is applied to a multi-terminal cooperative play system;
FIG. 15 is a schematic structural diagram of another play group management device according to an embodiment of the present invention; and

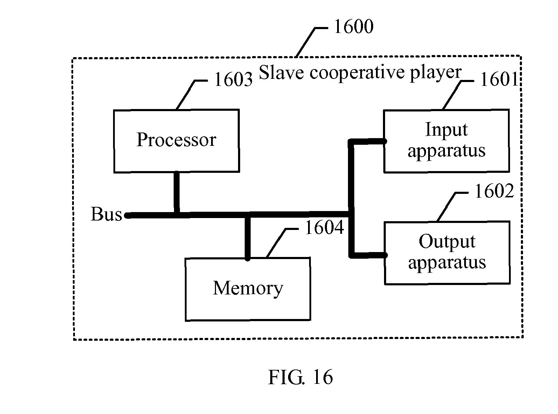

FIG. 16 is a schematic structural diagram of another slave cooperative player according to an embodiment of the present invention, which is applied to a multi-terminal cooperative play system.

### DESCRIPTION OF EMBODIMENTS

Embodiments of the present invention provide a multi-terminal cooperative play method for a multimedia file, and a related apparatus and system, which can achieve a stereo effect that multiple terminals play a multimedia file synchronously.

To make the objectives, features, and advantages of the embodiments of the present invention clearer, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons skilled in the art based on the embodiments of the present invention shall fall within the protection scope of the present invention.

The following gives detailed descriptions separately.

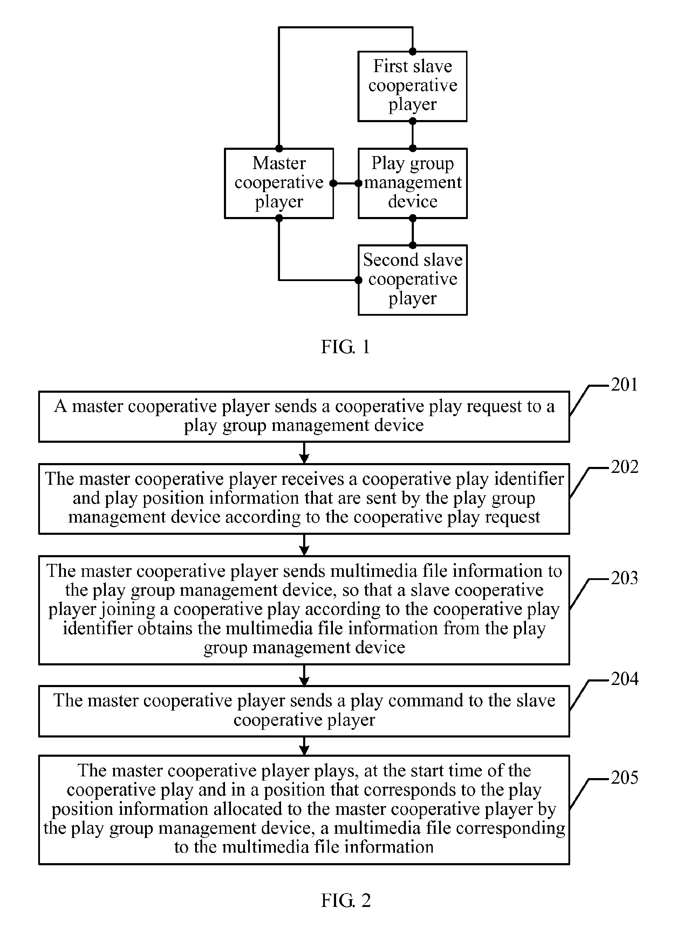

As shown in FIG. 1, a system architecture of a multi-terminal cooperative play system according to an embodiment of the present invention is first introduced. The multi-terminal cooperative play system includes: a master cooperative player, a play group management device, and at least one slave cooperative player, where
the master cooperative player and the slave cooperative player are both connected to a player management device in a communicable manner.

The multi-terminal cooperative play system provided in the embodiment of the present invention includes multiple slave cooperative players, and only two slave cooperative players are shown in FIG. 1. To distinguish between the two different slave cooperative players, the two slave cooperative players are named a first slave cooperative player and a second slave cooperative player separately. In an actual application, there may be one slave cooperative player or more than two slave cooperative players, which is not limited herein.

In the multi-terminal cooperative play system provided in the embodiment of the present invention, the master cooperative player actively initiates a cooperative play, and the slave cooperative player (the number of the slave cooperative players is not limited specially) may join the cooperative play to jointly achieve a stereo effect that multiple terminals play a multimedia file cooperatively. This play system may specifically be applied to a public network scenario in which the master cooperative player can rapidly establish a play channel and perform networking, for example, each device included in the multi-terminal cooperative play system may be connected to the Internet by using a third generation (3G, 3rd-generation) mobile communications technology, a second generation (2G, second generation) mobile communications technology, and the wireless fidelity (WiFi, wireless fidelity) technology.

The following solution in the embodiment of the present invention may be specifically implemented based on the multi-terminal cooperative play system of the architecture shown in FIG. 1, or a variant architecture thereof.

One embodiment of a multi-terminal cooperative play method for a multimedia file in the present invention may be applied to the multi-terminal cooperative play system. The method may include: sending, by a master cooperative player, a cooperative play request to a play group management device; receiving, by the master cooperative player, a cooperative play identifier and play position information that are sent by the play group management device according to the cooperative play request; sending, by the master cooperative player, multimedia file information to the play group management device, so that a slave cooperative player joining a cooperative play according to the cooperative play identifier obtains the multimedia file information from the play group management device; sending, by the master cooperative player, a play command to the slave cooperative player, where the play command includes start time of the cooperative play, so that the slave cooperative player plays, at the start time of the cooperative play and in a position that corresponds to play position information allocated to the slave cooperative player by the play group management device, a multimedia file corresponding to the multimedia file information; and playing, by the master cooperative player at the start time of the cooperative play and in a position that corresponds to the play position information allocated to the master cooperative player by the play group management device, the multimedia file corresponding to the multimedia file information.

Referring to FIG. 2, a multi-terminal cooperative play method for a multimedia file according to one embodiment of the present invention may include:
201: A master cooperative player sends a cooperative play request to a play group management device.

The master cooperative player actively initiates a cooperative play in a multi-terminal cooperative play system, and then the master cooperative player first sends the cooperative play request to the play group management device in the multi-terminal cooperative play system, so as to request the cooperative play from the play group management device.

In some embodiments of the present invention, the cooperative play request sent by the master cooperative player may further carry display effect information, where the display effect information indicates a play and display effect that is presented by the master cooperative player in the cooperative play. When the master cooperative player adds the display effect information into the cooperative play request and sends the cooperative play request to the play group management device, the play group management device may forward the display effect information to the slave cooperative player, where the display effect information is used to cause the slave cooperative player to present a play and display effect corresponding to the display effect information. The specific display effect information may include light effect display information, vibration effect display information, screen color effect display information, and the like. These display effects may be played together when a multimedia file is played, or only one or more display effects thereof may be presented according to a selection of a user, which improves use experience of the user, and achieves a more flexible and vivider stereo effect of a cooperative play for a multimedia file.

It should be noted that, in some embodiments of the present invention, the sending, by a master cooperative player, a cooperative play request to a play group management device in step 201 may specifically refer to: sending, by the master cooperative player, the cooperative play request to an electronic service guide apparatus (ESG, Electronics Service Guide), where the cooperative play request carries geographic position information of the master cooperative player, so that the ESG forwards the cooperative play request to the play group management device, and the play group management device allocates a cooperative play identifier and play position information to the master cooperative player according to the geographic position information of the master cooperative player.

In some embodiments of the present invention, the cooperative play request sent to the play group management device by the master cooperative player further carries the geographic position information of the master cooperative player, where the master cooperative player is connected to the ESG in a communicable manner, the ESG is connected to the play group management device in a communicable manner, and the ESG is mainly configured to provide a capability access function for cooperative players (including the master cooperative player and the slave cooperative player) and additionally include a service router (Router) function and a user management function.

In some embodiments of the present invention, the master cooperative player may obtain the geographic position information of the master cooperative player by using the global positioning system (GPS, Global Positioning System), the Galileo positioning system (Galileo Positioning system), the global navigation satellite system (GLOBAL NAVIGATION SATELLITE SYSTE), or the BeiDou navigation satellite system (BeiDou (COMPASS) Navigation Satellite System). Specifically, the geographic position information may be indicated by longitude and latitude of the world geodetic system, and additionally may also be indicated by using a rectangular plane coordinate system, a Gauss-Krüger coordinate system, and an elevation coordinate system, which is not limited herein.

202: The master cooperative player receives the cooperative play identifier and the play position information that are sent by the play group management device according to the cooperative play request.

Specifically, the master cooperative player receives the cooperative play identifier and the play position information that are forwarded by the ESG and are allocated to the master cooperative player by the play group management device.

In the embodiment of the present invention, after receiving the cooperative play request sent by the master cooperative player, the play group management device allocates one cooperative play identifier and play position information to the master cooperative player, where the cooperative play identifier may refer to a play group number allocated to the master cooperative player by the play group management device; the play group number is also called a play group ID (Identity, identity); the play group ID is a unique identifier allocated to the master cooperative player by the play group management device, and is used for indicating a play group allocated to the master cooperative player by the play group management device; one play group management device may manage multiple play groups, and distinguish, by using the play group number, between cooperative plays actively initiated by multiple master cooperative players; and the play group management device may allocate a play group ID to the master cooperative player randomly, or allocate a play group ID to the master cooperative player according to a specific algorithm rule, or allocate a play group ID to the master cooperative player according to the address position information of the master cooperative player.

In the embodiment of the present invention, the play position information allocated to the master cooperative player by the play group management device refers to position indication information of the master cooperative player in the cooperative play, where the play group management device may allocate a play position to the master cooperative player randomly. If the master cooperative player adds the geographic position information of the master cooperative player into the cooperative play request sent to the play group management device, the play group management device may allocate a play position to the master cooperative player according to the geographic position information of the master cooperative player, for example, allocate, according to a longitude and latitude position of the master cooperative player in the world geodetic system, a play position consistent with the longitude and latitude position. Specifically, the play position information may include relative play position information, where the relative play position information is information of a placement position of one cooperative player relative to another cooperative player participating in the cooperative play. That is, the play group management device may pre-specify a placement position of each cooperative player relative to other cooperative players for the cooperative play on multiple cooperative players; then when the master cooperative player initiates the cooperative play request, a piece of relative play position information is allocated to the master cooperative player according to the preset placement position of each cooperative player. After receiving a relative play position allocated to each cooperative player by the play group management device, each cooperative player is placed according to the relative play position, so as to achieve a stereo effect when a multimedia file is played cooperatively.

In some embodiments of the present invention, the cooperative play request sent to the play group management device by the master cooperative player may also carry information of a play manner, where the play manner includes one of the following content: stereo play, stereo array play, and surround sound play. Then, after receiving the information of the play manner sent by the master cooperative player, the play group management device allocates a relative play position to the master cooperative player according to a play manner selected by the master cooperative player; and after receiving the cooperative play request, the play group management device may also allocate a relative play position to the master cooperative player according to the geographic position information of the master cooperative player and a play manner selected by the master cooperative player.

The following describes in detail the allocation of the play position information by the play group management device to the master cooperative player. A selected play manner in the information of the play manner is generated by the master cooperative player, so as to indicate a play manner adopted by the master cooperative player, which is an initiator of the cooperative play, to play the multimedia file. Specifically, the play manner request generated by the master cooperative player includes one of the following content: stereo play, stereo array play, and surround sound play. The following gives separate descriptions by using examples:

The stereo play refers to a play manner in which a stereoscopic multimedia file is played in two completely opposite positions. For example, as shown in FIG. 3-a, FIG. 3-a is a schematic diagram of a stereo play formed by two mobile phone terminals, where one mobile phone terminal may refer to a master cooperative player, and the other mobile phone terminal may refer to a slave cooperative player. The master cooperative player and the slave cooperative player play the multimedia file synchronously, and then a user can experience a stereo play effect from the cooperative play of the master cooperative player and the slave cooperative player.

The stereo array play refers to a play manner in which multiple cooperative players form an array form in completely opposite positions to play a stereoscopic multimedia file. For example, as shown in FIG. 3-b, FIG. 3-b is a schematic diagram of a stereo array play formed by multiple mobile phone terminals, where one mobile phone terminal may refer to a master cooperative player, and all the other mobile phone terminals may refer to multiple slave cooperative players. One master cooperative player and some slave cooperative players are at one side of the array, the other slave cooperative players are at the other side of the array, and then a user can experience a stereo array play effect from the cooperative play of one master cooperative player and multiple slave cooperative players.

The surround sound play refers to a play manner in which multiple cooperative players surrounding a user play a stereoscopic multimedia file. For example, as shown in FIG. 3-c, FIG. 3-c is a schematic diagram of a surround sound play formed by multiple mobile phone terminals, where one mobile phone terminal may refer to a master cooperative player, and all the other mobile phone terminals may refer to multiple slave cooperative players. One master cooperative player and the other slave cooperative players surround the user, and then the user can experience a stereo array play effect from the cooperative play of one master cooperative player and multiple slave cooperative players.

The following describes, by using the surround sound play as an example, how the play group management device allocates a relative play position to the master cooperative player according to the cooperative play request sent by the master cooperative player. As shown in FIG. 4-a, when a master cooperative players initiates a cooperative play, and information of a play manner that is carried in the cooperative play request sent to the play group management device by the master cooperative player is surround sound play, where one implementation manner is that the master cooperative player sends the cooperative play request to the ESG; the ESG forwards the cooperative play request to the play group management device; the play group management device establishes a schematic diagram of relative play positions shown in FIG. 4-a; and the play group management device allocates position "1" shown in FIG. 4-a to the master cooperative player, and then after receiving the relative play position "1", the master cooperative player can perform placement according to this position; and after receiving a cooperative play joining request of the slave cooperative player, the play group management device may allocate relative play position "2" to the slave cooperative player according to the geographic position information of the slave cooperative player, and certainly may also allocate relative play position "6" to the slave cooperative player, which may be determined by the play group management device according to the geographic position information of the master cooperative player and the slave cooperative player. As shown in FIG. 4-b, if multiple slave cooperative players initiate cooperative play joining requests, the play group management device allocates relative play position "3", ..., and relative play position "6" to the slave cooperative players separately; and after receiving the relative play positions allocated to the slave cooperative players by the play group management device, the slave cooperative players adjust their own placement positions according to the relative play positions. In some embodiments of the present invention, after allocating relative play position "1" to the master cooperative player, the play group management device may also allocate relative play positions to the slave cooperative players according to a sequence in which the slave cooperative players join the cooperative play, for example, the play group management device may allocate relative play position "4" shown in FIG. 4-a to a slave cooperative player that joins the cooperative play first, and allocate relative play position "2" to a slave cooperative player that joins the cooperative play next, and slave cooperative players joining the cooperative play thereafter are placed in opposite positions in sequence and in pairs, which ensures that in a scenario in which another slave cooperative player cannot successfully join the cooperative play subsequently, the surround sound play can also be implemented, and improves the reliability of the multi-terminal cooperative play system.

It should be noted that, in some embodiments of the present invention, after the receiving, by the master cooperative player, a cooperative play identifier and play position information that are sent by the play group management device according to the cooperative play request in step 202, the method may further include the following step:
sending, by the master cooperative player, the cooperative play identifier to the slave cooperative player by using near field communication (NFC, Near Field Communication), so that the slave cooperative player joins the cooperative play according to the cooperative play identifier; or
sending, by the master cooperative player, the cooperative play identifier to an instant messaging (IM, Instant Messaging) server, so that the IM server forwards the cooperative play identifier to the slave cooperative player.

After receiving the cooperative play identifier sent by the play group management device, the master cooperative player may send the cooperative play identifier to the slave cooperative player, so that the slave cooperative player may learn, from this cooperative play identifier, a play group which the slave cooperative player needs to join before the slave cooperative player can perform a cooperative play with the master cooperative player. In the embodiment of the present invention, the step of sending, by the master cooperative player, the cooperative play identifier to the slave cooperative player may be implemented by using an NFC chip or the IM server, and specific descriptions are as follows:

An NFC chip is provided for both the master cooperative player and the slave cooperative player; when the slave cooperative player is close to the master cooperative player, the master cooperative player may send the cooperative play identifier to the slave cooperative player by using the NFC chip. In addition, the master cooperative player and the slave cooperative player may also be both connected to the IM server in a communicable manner; when the master cooperative player receives the cooperative play identifier, the master cooperative player first sends the cooperative play identifier to the IM server, and then the IM server forwards the cooperative play identifier to the slave cooperative player. The master cooperative player actively delivers the cooperative play identifier to the slave cooperative player by using the NFC chip or the IM player, which helps the slave cooperative player initiate the cooperative play joining request rapidly, and thereby achieves, as soon as possible, a stereo effect that multiple terminals play the multimedia file cooperatively.

203: The master cooperative player sends multimedia file information to the play group management device, so that a slave cooperative player joining the cooperative play according to the cooperative play identifier obtains the multimedia file information from the play group management device.

In the embodiment of the present invention, after receiving the cooperative play identifier and the play position information allocated by the play group management device, the master cooperative player may obtain, from the cooperative play identifier, a play group number allocated by the play group management device; the master cooperative player determines that the play group management device provides a cooperative play service for the master cooperative player; and then the master cooperative player sends the multimedia file information to the play group management device, where the multimedia file information indicates a multimedia file that needs to be played by the master cooperative player in the cooperative play, and the multimedia file information may include an identity (ID, IDentity) of the multimedia file that needs to be played. After the play group management device receives the multimedia file information, the slave cooperative player may obtain the multimedia file information from the play group management device, so that the slave cooperative player acquires a multimedia file which needs to be played by the master cooperative player in the cooperative play.

In some embodiments of the present invention, the multimedia file may specifically refer to a voice file, such as some songs or a music ring back tone to which the master cooperative player subscribes; may also refer to a video file, such as MV of some songs or an ending song of a teleplay; may also refer to a game file, such as a downloaded entertainment game in the master cooperative player; and may also refer to a picture file, such as, multiple selfies which a mobile phone terminal is capable of playing and presenting. In addition, the present invention is also applicable to a scenario in which multiple cooperative players play a music game cooperatively, such as multiple music games in which guitar, piano, mouth organ, trumpet and the like are separately played to jointly play same music. As long as a data file can be used for implementing simultaneous and synchronous play on multiple cooperative players, the data file can be defined as the multimedia file described in the embodiment of the present invention.

It should be noted that, in some embodiments of the present invention, when the master cooperative player needs to play one multimedia file cooperatively, multimedia file information is used to indicate an ID of the multimedia file that needs to be played cooperatively. When the master cooperative player needs to play multiple multimedia files cooperatively, the multimedia file information may further include a play list, where the play list includes IDs of multiple multimedia files that need to be played cooperatively.

It should be noted that, in the embodiment of the present invention, the multimedia file that needs to be played cooperatively by the master cooperative player may be stored locally in the master cooperative player, for example, the multimedia file that needs to be played cooperatively by the master cooperative player is a default ring tone of the mobile phone terminal. Certainly, the multimedia file that needs to be played cooperatively by the master cooperative player may not be stored locally, but is a multimedia file to which the master cooperative player subscribes in a content management system (CMS, Content Management System). Then in the embodiment of the present invention, before the sending, by the master cooperative player, the multimedia file information to the play group management device, the method may further include the following steps:
sending, by the master cooperative player, a multimedia file request to the ESG, where the multimedia file request carries an ID of the master cooperative player, so that the ESG forwards the multimedia file request to the CMS, and the CMS generates, according to the ID of the master cooperative player, the multimedia file information and a download address of the multimedia file corresponding to the multimedia file information, where the CMS is configured to manage multimedia file subscription relationships of cooperative players and a download address corresponding to a subscribed multimedia file;
receiving, by the master cooperative player, the multimedia file information and the download address of the multimedia file corresponding to the multimedia file information that are forwarded to the ESG by the CMS; and
downloading, by the master cooperative player from the CMS according to the download address of the multimedia file corresponding to the multimedia file information, the multimedia file corresponding to the multimedia file information.

In some embodiments of the present invention, the ESG is connected to the CMS in a communicable manner, and the CMS is configured to maintain subscription relationships between cooperative players and the multimedia file and may function as a multimedia file download server. When the master cooperative player needs to download the multimedia file from the CMS, the master cooperative player may send the multimedia file request to the ESG; the master cooperative player receives the multimedia file information and the download address of the multimedia file corresponding to the multimedia file information that are sent by the ESG; the master cooperative player downloads, from the CMS according to the download address, the multimedia file corresponding to the multimedia file information. After the master cooperative player obtains, from the CMS, the multimedia data to which the master cooperative player subscribes, the CMS may select, from the multimedia data, download addresses corresponding to multimedia files that need to be played cooperatively, and the master cooperative player downloads the multimedia files from the CMS according to the download addresses. After downloading the multimedia files, the master cooperative player adds IDs of the multimedia files to the play list, and then sends the play list to the play group management device in a form of multimedia file information.

It should be noted that, in some embodiments of the present invention, the master cooperative player is connected to the ESG in a communicable manner; the master cooperative player may send the multimedia file information to the ESG by using a connection channel between the master cooperative player and the ESG; the ESG forwards the multimedia file information to the play group management device; and the slave cooperative player may obtain the multimedia file information from the play group management device by using the ESG, so that the slave cooperative player can obtain a multimedia file which needs to be played cooperatively by the master cooperative player.

204: The master cooperative player sends a play command to the slave cooperative player.

The play command includes start time of the cooperative play, so that the slave cooperative player plays, at the start time of the cooperative play and in a position that corresponds to the play position information allocated to the slave cooperative player by the play group management device, the multimedia file corresponding to the multimedia file information.

In the embodiment of the present invention, after sending the multimedia file information to the play group management device, the master cooperative player delivers the play command to the slave cooperative player, where the play command includes the start time of the cooperative play, that is, the master cooperative player sends, to the slave cooperative player, the time when the cooperative play is performed; and then the slave cooperative player needs to perform the cooperative play at the specified time according to the play command of the master cooperative player.

It should be noted that, in some embodiments of the present invention, the sending, by the master cooperative player, a play command to the slave cooperative player in step 204 may be implemented in many manners, for example, the master cooperative player sends the play command to the slave cooperative player by using a short message service message; or the master cooperative player sends the play command to the IM server, so that the IM server forwards the play command to the slave cooperative player. The master cooperative player and the slave cooperative player may also be both connected to the IM server in a communicable manner. When the master cooperative player sends the play command to the IM server, the IM server forwards the play command to the slave cooperative player.

It should be noted that, in the embodiment of the present invention, the master cooperative player and the slave cooperative player need to play multimedia file data cooperatively, and the master cooperative player specifies the time of the cooperative play in the play command; therefore clocks of the master cooperative player and the slave cooperative player need to be kept synchronous. To ensure a successful cooperative play, before the sending, by the master cooperative player, a play command to the slave cooperative player, the embodiment of the present invention may further include the following step: performing, by the master cooperative player, clock synchronization with the slave cooperative player. In the embodiment of the present invention, the performing, by the master cooperative player, clock synchronization with the slave cooperative player may be implemented in many manners, which is described below by using examples.

For example, the master cooperative player synchronizes a clock of the master cooperative player to a network time protocol (NTP, Network Time Protocol) server, so that when receiving a clock synchronization request sent by the slave cooperative player, the NTP server sends clock information of the NTP server to the slave cooperative player; or, the master cooperative player sends clock information of the master cooperative player to the slave cooperative player by using the NFC chip, so that the slave cooperative player adjusts, according to the clock information of the master cooperative player, a clock of the slave cooperative player to be synchronized with a clock of the master cooperative player.

Before sending the play command, to ensure that the master cooperative player and the slave cooperative player use a same clock, the master cooperative player sends a clock synchronization request to the NTP server. After receiving the clock synchronization request sent by the master cooperative player, the NTP server sends the clock information of the NTP server to the master cooperative player. If the clock of the master cooperative player is not the same as the clock of the NTP server, the master cooperative player adjusts the clock of the master cooperative player according to the clock of the NTP server. The slave cooperative player also needs to synchronize the clock of the slave cooperative player to that of the NTP server; therefore the master cooperative player and the slave cooperative player maintain the same clock by using the NTP server, which further ensures that the master cooperative player and the slave cooperative player can play the multimedia file simultaneously and synchronously, and achieves a stereo effect of the cooperative play on multiple terminals.

It should be noted that, the master cooperative player sends the clock of the master cooperative player to the slave cooperative player by using the NFC chip, so that the slave cooperative player adjusts the clock of the slave cooperative player, so as to maintain synchronization with the clock of the master cooperative player. That is, an NFC chip is provided for both the master cooperative player and the slave cooperative player. Through communication between NFC chips, the slave cooperative player obtains the clock information of the master cooperative player by using the NFC chip, and then adjusts the clock of the slave cooperative player to maintain synchronization with the clock of the master cooperative player. In this case, the master cooperative player and the slave cooperative player can use the same clock without requiring the master cooperative player to adjust its clock.

It should be noted that, in the embodiment of the present invention, if the multimedia file information sent to the play group management device by the master cooperative player includes a play list, it indicates that the master cooperative player needs to play multiple multimedia files cooperatively. Then the master cooperative player also needs to add, into the play command sent to the slave cooperative player, an ID of a multimedia file designated to play in the play list and play time of the multimedia file designated to play.

205: The master cooperative player plays, at the start time of the cooperative play and in a position that corresponds to the play position information allocated to the master cooperative player by the play group management device, the multimedia file corresponding to the multimedia file information.

The master cooperative player may deliver the play command by using the IM server, where the play command includes start time of the designated play. Then, when the start time of the designated play arrives, the master cooperative player starts to play, in the position that corresponds to the play position information allocated to the master cooperative player by the play group management device, the multimedia file corresponding to the multimedia file information. The slave cooperative player also receives the play command; therefore, when the start time of the designated play arrives, the slave cooperative player also starts to play, in the position that corresponds to the play position information allocated to the master cooperative player by the play group management device, the multimedia file corresponding to the multimedia file information, which achieves a stereo effect that the master cooperative player and the slave cooperative player play the multimedia file simultaneously and synchronously.

As can be known from the foregoing embodiment, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

In the foregoing embodiment, the multi-terminal cooperative play method for a multimedia file of the present invention is described by using a master cooperative player as an action execution body, and the following describes, at a play group management device side, another embodiment of the multi-terminal cooperative play method for a multimedia file of the present invention, which may include the following content: allocating, by a play group management device, a cooperative play identifier and play position information to the master cooperative player according to a cooperative play request sent by the master cooperative player; sending, by the play group management device to the master cooperative player, the cooperative play identifier and the play position information that are allocated to the master cooperative player; allocating, by the play group management device, play position information to the slave cooperative player according to a cooperative play joining request sent by the slave cooperative player, where the cooperative play joining request carries a cooperative play identifier of a play group that the slave cooperative player needs to join; sending, by the play group management device to the slave cooperative player, the play position information allocated to the slave cooperative player; receiving, by the play group management device, multimedia file information sent by the master cooperative player; and sending, by the play group management device, the multimedia file information to the slave cooperative player, so that the slave cooperative player obtains a multimedia file corresponding to the multimedia file information.

Referring to FIG. 5, a multi-terminal cooperative play method for a multimedia file according to another embodiment of the present invention may include:
501: A play group management device allocates a cooperative play identifier and play position information to a master cooperative player according to a cooperative play request sent by the master cooperative player.

The master cooperative player actively initiates the cooperative play request in a multi-terminal cooperative play system. After receiving the cooperative play request sent by the master cooperative player, the play group management device allocates the cooperative play identifier and the play position information to the master cooperative player.

In some embodiments of the present invention, before the allocating, by a play group management device, a cooperative play identifier and play position information to a master cooperative player according to a cooperative play request sent by the master cooperative player in step 501, the method further includes:
receiving, by the play group management device, the cooperative play request forwarded by an ESG, where the cooperative play request is sent to the ESG by the master cooperative player, and the cooperative play request carries geographic position information of the master cooperative player.

The allocating, by a play group management device, a cooperative play identifier and play position information to a master cooperative player according to a cooperative play request sent by the master cooperative player in step 501 is specifically:
allocating, by the play group management device, the cooperative play identifier and the play position information to the master cooperative player according to the geographic position information of the master cooperative player.

In some embodiments of the present invention, the cooperative play request sent to the play group management device by the master cooperative player further carries the geographic position information of the master cooperative player, where the master cooperative player is connected to the ESG in a communicable manner, the ESG is connected to the play group management device in a communicable manner, and the ESG is mainly configured to provide a capability access function for cooperative players (including the master cooperative player and the slave cooperative player) and additionally include a service router function and a user management function.

In the embodiment of the present invention, after receiving the cooperative play request sent by the master cooperative player, the play group management device allocates one cooperative play identifier and play position information to the master cooperative player, where the cooperative play identifier may refer to a play group number allocated to the master cooperative player by the play group management device; the play group number is also called a play group ID; the play group ID is a unique identifier allocated to the master cooperative player by the play group management device, and is used for indicating a play group allocated to the master cooperative player by the play group management device; one play group management device may manage multiple play groups, and distinguish, by using the play group number, between cooperative plays actively initiated by multiple master cooperative players; and the play group management device may allocate a play group ID to the master cooperative player randomly, or allocate a play group ID to the master cooperative player according to a specific algorithm rule, or allocate a play group ID to the master cooperative player according to the address position information of the master cooperative player.

In the embodiment of the present invention, the play position information allocated to the master cooperative player by the play group management device refers to position indication information of the master cooperative player in the cooperative play, where the play group management device may allocate a play position to the master cooperative player randomly. If the master cooperative player adds the geographic position information of the master cooperative player into the cooperative play request sent to the play group management device, the play group management device may allocate a play position to the master cooperative player according to the geographic position information of the master cooperative player, for example, allocate, according to a longitude and latitude position of the master cooperative player in the world geodetic system, a play position consistent with the longitude and latitude position. Specifically, the play position information may include relative play position information, where the relative play position information is information of a placement position of one cooperative player relative to another cooperative player participating in the cooperative play. That is, the play group management device may pre-specify a placement position of each cooperative player relative to other cooperative players for the cooperative play on multiple cooperative players; then when the master cooperative player initiates the cooperative play request, a piece of relative play position information is allocated to the master cooperative player according to the preset placement position of each cooperative player. After receiving a relative play position allocated to each cooperative player by the play group management device, each cooperative player is placed according to the relative play position, so as to achieve a stereo effect when a multimedia file is played cooperatively. For an implementation manner in which the play group management device allocates relative play positions to cooperative players, refer to FIG. 3-a, FIG. 3-b, FIG. 4-a, and FIG. 4-b, and corresponding introductions in the text descriptions corresponding to the figures.

In some embodiments of the present invention, if the cooperative play request further carries display effect information, after the allocating, by a play group management device, play position information to a slave cooperative player according to a cooperative play joining request sent by the slave cooperative player in step 501, the method may further include the following step: sending, by the play group management device, the display effect information to the slave cooperative player, so that the slave cooperative player presents a play and display effect corresponding to the display effect information.

502: The play group management device sends, to the master cooperative player, the cooperative play identifier and the play position information that are allocated to the master cooperative player.

Specifically, the play group management device may directly send, to the master cooperative player, the cooperative play identifier and the play position information that are allocated to the master cooperative player; the play group management device may also send, to the ESG, the cooperative play identifier and the play position information that are allocated to the master cooperative player, and the ESG forwards, to the master cooperative player, the cooperative play identifier and the play position information that are allocated to the master cooperative player.

In some embodiments of the present invention, the master cooperative player is connected to the ESG in a communicable manner, and the ESG is connected to the play group management device in a communicable manner.

503: The play group management device allocates play position information to the slave cooperative player according to a cooperative play joining request sent by the slave cooperative player.

The cooperative play joining request carries a cooperative play identifier of a play group that the slave cooperative player needs to join.

In some embodiments of the present invention, in step 503, the cooperative play joining request carries geographic position information of the slave cooperative player, and the allocating, by the play group management device, play position information to the slave cooperative player according to a cooperative play joining request sent by the slave cooperative player includes:
allocating, by the play group management device to the slave cooperative player according to the geographic position information of the slave cooperative player, play position information that corresponds to a play manner selected by the master cooperative player.

In the embodiment of the present invention, the play position information allocated to the slave cooperative player by the play group management device refers to position indication information of the slave cooperative player in a cooperative play, where the play group management device may allocate a play position to the slave cooperative player randomly. If the slave cooperative player adds geographic position information of the slave cooperative player into the cooperative play joining request sent to the play group management device, after obtaining, from the master cooperative player, the play manner selected by the master cooperative player, the play group management device may allocate, to the slave cooperative player according to the geographic position information of the slave cooperative player, the play position information that corresponds to the play manner selected by the master cooperative player. Specifically, the play position information may include relative play position information, where the relative play position information is information of a placement position of one cooperative player relative to another cooperative player participating in the cooperative play. That is, the play group management device may pre-specify a placement position of each cooperative player relative to other cooperative players for the cooperative play on multiple cooperative players; then when the master cooperative player initiates the cooperative play request, a piece of relative play position information is allocated to the master cooperative player according to the preset placement position of each cooperative player. After receiving a relative play position allocated to the slave cooperative player by the play group management device, the slave cooperative player is placed according to the relative play position, so as to achieve a stereo effect when a multimedia file is played cooperatively.

The play group management device may allocate, to the slave cooperative player according to the play manner selected by the master cooperative player, a play position that corresponds to the play manner selected by the master cooperative player. For an implementation manner in which the play group management device allocates a relative play position to the slave cooperative player, refer to FIG. 3-a, FIG. 3-b, FIG. 4-a, and FIG. 4-b, and corresponding introductions in the text descriptions corresponding to the figures.

It should be noted that, if the cooperative play request further carries information of a play manner, where the play manner includes stereo play, stereo array play, and surround sound play; after the allocating, by the play group management device, play position information to the slave cooperative player according to a cooperative play joining request sent by the slave cooperative player in step 503, the method further includes: sending, by the play group management device, the information of the play manner to the slave cooperative player, so that the slave cooperative player plays the multimedia file according to the play manner selected by the master cooperative player.

504: The play group management device sends, to the slave cooperative player, the play position information allocated to the slave cooperative player.

Specifically, the play group management device sends, to the ESG, the play position information allocated to the slave cooperative player, and the ESG forwards, to the slave cooperative player, the play position information allocated to the slave cooperative player.

In some embodiments of the present invention, the slave cooperative player is connected to the ESG in a communicable manner, and the ESG is connected to the play group management device in a communicable manner.

505: The play group management device receives multimedia file information sent by the master cooperative player.

506: The play group management device sends the multimedia file information to the slave cooperative player, so that the slave cooperative player obtains a multimedia file corresponding to the multimedia file information.

Specifically, the play group management device may directly send the multimedia file information to the slave cooperative player; the play group management device may also be connected to the ESG; the play group management device may send the received multimedia file information to the ESG, and the ESG forwards the multimedia file information to the slave cooperative player. In addition, the multimedia file information further includes a play list, where the play list includes IDs of multiple multimedia files that need to be played cooperatively; and the play group management device also needs to send the play list to the slave cooperative player together.

As can be known from the foregoing embodiment, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

In the foregoing embodiments, the multi-terminal cooperative play method for a multimedia file in the present invention is described by using a master cooperative player and a play group management device as action execution bodies, and the following describes, at a slave cooperative player side, another embodiment of the multi-terminal cooperative play method for a multimedia file of the present invention, which may include the following content: obtaining, by a slave cooperative player, a cooperative play identifier allocated to a master cooperative player by a play group management device; sending, by the slave cooperative player, a cooperative play joining request to the play group management device according to the cooperative play identifier, where the cooperative play joining request carries a cooperative play identifier of a play group that the slave cooperative player needs to join; receiving, by the slave cooperative player, play position information that is sent by the play group management device according to the cooperative play joining request; receiving, by the slave cooperative player, multimedia file information sent by the play group management device; receiving, by the slave cooperative player, a play command sent by the master cooperative player, where the play command includes start time of a cooperative play; and playing, by the slave cooperative player at the start time of the cooperative play and in a position that corresponds to the play position information allocated to the slave cooperative player by the play group management device, a multimedia file corresponding to the multimedia file information.

Referring to FIG. 6, a multi-terminal cooperative play method for a multimedia file according to another embodiment of the present invention may include the following steps:
601: A slave cooperative player obtains a cooperative play identifier that is allocated to a master cooperative player by a play group management device.

The master cooperative player actively initiates a cooperative play in a multi-terminal cooperative play system; after the master cooperative player obtains, through application, the cooperative play identifier from the play group management device, the slave cooperative player functions as a participant, and the master cooperative player may send the cooperative play identifier to the slave cooperative player, so that the slave cooperative player can join the cooperative play according to the cooperative play identifier. The cooperative play identifier may refer to a play group number allocated to the master cooperative player by the play group management device, and the slave cooperative player may initiate, to the play group management device by using a unique identifier allocated to the master cooperative player by the play group management device, joining the cooperative play created by the master cooperative player.

It should be noted that, in some embodiments of the present invention, the obtaining, by a slave cooperative player, a cooperative play identifier that is allocated to a master cooperative player by a play group management device in step 601 may be implemented in many manners. For example, the slave cooperative player receives, by using an NFC chip, the cooperative play identifier sent by the master cooperative player; or, the slave cooperative player receives the cooperative play identifier sent by an IM server, where the cooperative play identifier is sent to the IM server by the master cooperative player. The master cooperative player actively delivers the cooperative play identifier to the slave cooperative player by using the NFC chip or the IM player, which helps the slave cooperative player initiate the cooperative play joining request rapidly, and thereby achieves, as soon as possible, a stereo effect that multiple terminals play the multimedia file cooperatively.

602: The slave cooperative player sends the cooperative play joining request to the play group management device according to the cooperative play identifier.

The cooperative play joining request carries a cooperative play identifier of a play group that the slave cooperative player needs to join.

It should be noted that, in some embodiments of the present invention, the sending, by the slave cooperative player, the cooperative play joining request to the play group management device according to the cooperative play identifier in step 602 may specifically refer to: sending, by the slave cooperative player, the cooperative play joining request to an ESG, where the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player.

In some embodiments of the present invention, the cooperative play joining request sent to the play group management device by the slave cooperative player further carries the geographic position information of the slave cooperative player, where the slave cooperative player is connected to the ESG in a communicable manner, the ESG is connected to the play group management device in a communicable manner, and the ESG is mainly configured to provide a capability access function for cooperative players (including the master cooperative player and the slave cooperative player) and additionally include a service router (Router) function and a user management function.

In some embodiments of the present invention, the slave cooperative player may obtain the geographic position information of the slave cooperative player by using the global positioning system, the Galileo positioning system, the global navigation satellite system, or the BeiDou navigation satellite system. Specifically, the geographic position information may be indicated by longitude and latitude of the world geodetic system, and additionally may also be indicated by using a rectangular plane coordinate system, a Gauss-Krüger coordinate system, and an elevation coordinate system, which is not limited herein.

603: The slave cooperative player receives play position information that is sent by the play group management device according to the cooperative play joining request.

Specifically, the slave cooperative player receives the play position information that is forwarded by the ESG and is allocated to the slave cooperative player by the play group management device.

In the embodiment of the present invention, the play position information allocated to the slave cooperative player by the play group management device refers to position indication information of the slave cooperative player in a cooperative play, where the play group management device may allocate a play position to the slave cooperative player randomly. If the slave cooperative player adds geographic position information of the slave cooperative player into the cooperative play joining request sent to the play group management device, after obtaining, from the master cooperative player, the play manner selected by the master cooperative player, the play group management device may allocate, to the slave cooperative player according to the geographic position information of the slave cooperative player, the play position information that corresponds to the play manner selected by the master cooperative player. Specifically, the play position information may include relative play position information, where the relative play position information is information of a placement position of one cooperative player relative to another cooperative player participating in the cooperative play. That is, the play group management device may pre-specify a placement position of each cooperative player relative to other cooperative players for the cooperative play on multiple cooperative players; then when the master cooperative player initiates the cooperative play request, a piece of relative play position information is allocated to the master cooperative player according to the preset placement position of each cooperative player. After receiving a relative play position allocated to the slave cooperative player by the play group management device, the slave cooperative player is placed according to the relative play position, so as to achieve a stereo effect when a multimedia file is played cooperatively.

The play group management device may allocate, to the slave cooperative player according to the play manner selected by the master cooperative player, a play position that corresponds to the play manner selected by the master cooperative player. For an implementation manner in which the play group management device allocates a relative play position to the slave cooperative player, refer to FIG. 3-a, FIG. 3-b, FIG. 4-a, and FIG. 4-b, and corresponding introductions in the text descriptions corresponding to the figures.

It should be noted that, in some embodiments of the present invention, if the cooperative play request further carries display effect information, after the receiving, by the slave cooperative player, play position information that is sent by the play group management device according to the cooperative play joining request, the method further includes: receiving, by the slave cooperative player, the display effect information sent by the play group management device, so that the slave cooperative player presents a play and display effect corresponding to the display effect information.

In some other embodiments of the present invention, if the cooperative play request further carries information of a play manner, where the play manner includes stereo play, stereo array play, and surround sound play, after the receiving, by the slave cooperative player, play position information that is sent by the play group management device according to the cooperative play joining request, the method further includes: receiving, by the slave cooperative player, the information of the play manner sent by the play group management device, so that the slave cooperative player plays the multimedia file according to the play manner selected by the master cooperative player.

604: The slave cooperative player receives multimedia file information sent by the play group management device.

In the embodiment of the present invention, after receiving the play position information sent by the play group management device, the slave cooperative player receives the multimedia file information sent by the play group management device.

The multimedia file information indicates a multimedia file that needs to be played by the master cooperative player during the cooperative play, and the multimedia file information may include an ID of the multimedia file that needs to be played. After the play group management device receives the multimedia file information, the play group management device sends the multimedia file information to the slave cooperative player, so that the slave cooperative player learns a multimedia file which needs to be played by the master cooperative player during the cooperative play.

It should be noted that, in some embodiments of the present invention, when the master cooperative player needs to play one multimedia file cooperatively, multimedia file information is used to indicate an ID of the multimedia file that needs to be played cooperatively. When the master cooperative player needs to play multiple multimedia files cooperatively, the multimedia file information may further include a play list, where the play list includes IDs of multiple multimedia files that need to be played cooperatively. When receiving the multimedia file information from the play group management device, the slave cooperative player may obtain the play list, so as to learn multimedia files which need to be played cooperatively.

It should be noted that, in the embodiment of the present invention, the multimedia file that needs to be played cooperatively by the slave cooperative player may be stored locally in the slave cooperative player, for example, the multimedia file that needs to be played cooperatively by the slave cooperative player is a default ring tone of the mobile phone terminal. If the multimedia file that needs to be played cooperatively by the master cooperative player is not stored locally, but is a multimedia file to which the slave cooperative player subscribes in a CMS according to the multimedia file information, in the embodiment of the present invention, after the receiving, by the slave cooperative player, multimedia file information sent by the play group management device, the method further includes:
obtaining, by the slave cooperative player from the multimedia file information, a download address of a multimedia file corresponding to the multimedia file information; and
downloading, by the slave cooperative player from the CMS according to the download address of the multimedia file, the multimedia file corresponding to the download address, where the CMS is configured to manage multimedia file subscription relationships of cooperative players and a download address corresponding to a subscribed multimedia file.

In some embodiments of the present invention, the ESG is connected to the CMS in a communicable manner, and the CMS is configured to maintain subscription relationships between cooperative players and the multimedia file and may function as a multimedia file download server. The slave cooperative player downloads, from the CMS according to the download address, the multimedia file corresponding to the multimedia file information.

605: The slave cooperative player receives a play command sent by the master cooperative player.

The play command includes start time of the cooperative play.

It should be noted that, in some embodiments of the present invention, the receiving, by the slave cooperative player, a play command sent by the master cooperative player in step 605 may be implemented in many manners, for example, the slave cooperative player receives the play command from the IM server, where the play command is sent to the IM server by the master cooperative player; or the slave cooperative player receives, by using a short message service message, the play command sent by the master cooperative player. The master cooperative player and the slave cooperative player may also be both connected to the IM server in a communicable manner. When the master cooperative player sends the play command to the IM server, the IM server forwards the play command to the slave cooperative player.

It should be noted that, in the embodiment of the present invention, the master cooperative player and the slave cooperative player need to play multimedia file data cooperatively, and the master cooperative player specifies the time of the cooperative play in the play command; therefore clocks of the master cooperative player and the slave cooperative player need to be kept synchronous. To ensure successful implementation of the cooperative play, before the sending, by the master cooperative player, a play command to the slave cooperative player, the embodiment of the present invention may further include the following step: performing, by the slave cooperative player, clock synchronization with the master cooperative player. In the embodiment of the present invention, the performing, by the slave cooperative player, clock synchronization with the master cooperative player may be implemented in many manners, which is described in the following by using examples.

For example, the slave cooperative player sends a clock synchronization request to an NTP server, receives clock information of the NTP server sent by the NTP server, and adjusts a clock of the slave cooperative player according to the clock information of the NTP server; or, the slave cooperative player receives, by using the NFC chip, clock information sent by the master cooperative player, and adjusts, according to the clock information of the master cooperative player, a clock of the slave cooperative player to be synchronized with a clock of the master cooperative player.

If the clock of the slave cooperative player is not the same as the clock of the NTP server, the slave cooperative player adjusts the clock of the master cooperative player according to the clock of the NTP server. The master cooperative player also needs to synchronize the clock of the master cooperative player to that of the NTP server; therefore the master cooperative player and the slave cooperative player maintain the same clock by using the NTP server, which further ensures that the master cooperative player and the slave cooperative player can play the multimedia file simultaneously and synchronously, and achieving a stereo effect of the cooperative play of multiple terminals.

It should be noted that, an NFC chip is provided for both the master cooperative player and the slave cooperative player. Through communication between NFC chips, the slave cooperative player obtains the clock information of the master cooperative player by using the NFC chip, and then adjusts the clock of the slave cooperative player to maintain synchronization with the clock of the master cooperative player. In this case, the master cooperative player and the slave cooperative player can use the same clock without requiring the master cooperative player to adjust its clock.

Further, that the master cooperative player functions as a master mobile phone terminal is used as an example. A time of the master mobile phone terminal is used as a target time; when the participant, that is, the slave cooperative player (using a slave mobile phone terminal as an example), performs near field communication with the master cooperative player, the master cooperative player transfers the clock of the current mobile phone terminal to the participant, that is, the slave cooperative player. To ensure the precision of clock synchronization, the NTP technology is used to remove a network delay. Please refer to descriptions about various timestamps defined in the following table 1:

**Table 1**

| **Timestamp name** | **ID** | **Description of generated time** |
|---|---|---|
| Start timestamp | T1 | A moment when the slave cooperative player sends a time request |
| Reception timestamp | T2 | A moment when the master cooperative player receives the time request |
| Transmission timestamp | T3 | A moment when the master cooperative player sends a time response |
| Arrival timestamp | T4 | A moment when the slave cooperative player receives the time response |

According to each timestamp defined in the foregoing table 1, assuming that a time offset needing to be adjusted by the slave cooperative player is t, t={(T2-T1)+(T3-T4)}/2.

606: The slave cooperative player plays, at the start time of the cooperative play and in a position that corresponds to the play position information allocated to the slave cooperative player by the play group management device, the multimedia file corresponding to the multimedia file information.

As can be known from the foregoing embodiment, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

For the convenience of better understanding and implementing the foregoing solution of the embodiment of the present invention, the following makes specific descriptions by using several application scenarios as examples.

The following mainly uses an architecture based on a multi-terminal cooperative play system shown in FIG. 7-a as an example. The multi-terminal cooperative play system includes a master cooperative player, an ESG, a play group management device, at least one slave cooperative player, an IM server, and a CMS, where:
the master cooperative player and the slave cooperative player are both connected to the ESG in a communicable manner; the master cooperative player and the slave cooperative player are both connected to the IM server in a communicable manner; the ESG is connected to the play group management device in a communicable manner; the play group management device is connected to the IM server in a communicable manner; the ESG is connected to the CMS in a communicable manner; and the CMS is connected to the slave cooperative player in a communicable manner.

The multi-terminal cooperative play system provided in the embodiment of the present invention includes multiple slave cooperative players, and only two slave cooperative players are shown in FIG. 7-a. To distinguish between the two different slave cooperative players, the two slave cooperative players are named a first slave cooperative player and a second slave cooperative player separately. In an actual application, there may be one slave cooperative player or more than two slave cooperative players, which is not limited herein.

For example, in a telecommunication operator network, the ESG may be deployed at a capability layer of a network in which the multi-terminal cooperative play system is located; the IM server may also be deployed at the capability layer of the network in which the multi-terminal cooperative play system is located; the play group management device may be deployed at a core layer of the network in which the multi-terminal cooperative play system is located; and the CMS may also be deployed at the core layer of the network in which the multi-terminal cooperative play system is located.

In an application scenario, that the multimedia file is a music file to which a user subscribes is used as an example for description. Referring to FIG. 7-b, the multi-terminal cooperative play system includes: a cooperative player client (Client) 701, a social relationship management server (SNS, Social Networking Services) 702, an ESG 703, an IM server 704, a play group management device 705, and a CMS 706.

The cooperative player 701 may specifically refer to a master cooperative player, and may also refer to a slave cooperative player. Only either of the master cooperative player and the slave cooperative player is shown in FIG. 7, and is collectively called a cooperative player. In an actual application, the multi-terminal cooperative play system includes a master cooperative player and a slave cooperative player.

The cooperative player 701 may specifically refer to a mobile phone terminal, and is configured to implement a function of instant messaging with the IM server 704 by using the Extensible Messaging and Presence Protocol (XMPP, The Extensible Messaging and Presence Protocol), and access the ESG 703 by using hypertext transfer protocol (HTTP, Hypertext transfer protocol) information, so as to implement capabilities of an address book-related service and a music service.

The SNS 702 is configured to provide functions such as buddy relationship management, buddy discovery, and buddy matching, where the SNS 702 is deployed at a capability layer of the telecommunication operation network.

The ESG 703 is configured to provide a capability access function for the mobile phone terminal and include a service Router function and a user management function, and provide interconnection between music bases of different operators to obtain a music library resource and a subscription relationship. As shown in FIG. 7, the ESG 703 may specifically be interconnected to multiple operators, such as China Mobile (China Mobile), China Unicom (China Unicom), and China Telecom, by using the Simple Object Access Protocol (SOAP, Simple Object Access Protocol) or the FTP protocol.

The IM server 704 is an open-source IM server based on the XMPP protocol; the ESG implements the user management function, such as user registration and password reset, in the IM server by using the HTTP information; the cooperative player 701 accesses the IM server by using the XMPP protocol to implement the instant messaging function; the SNS 702 accesses the IM server 704 by using the XMPP protocol to implement the message function of the SNS; and the IM server 704 implements interconnection to a third-party IM system by using an IM GW. The IM server 704 is deployed at the capability layer of the telecommunication operation network.

The play group management device 705 is configured to establish a play group for multiple cooperative players, allocate a play group ID and play position information, deliver a play list and a download address in the group, perform intra-group user management (discovering and specifying the play group), and the like. The play group management device 705 is deployed at a core layer of the telecommunication operation network.

The CMS 706 is configured to maintain a subscription relationship between a user and music, and function as a file download server, where only a user who has the subscription relationship in the CMS can initiate the cooperative play. The CMS 706 is deployed at the core layer of the telecommunication operation network.

The following describes, by using an example, a procedure of a multi-terminal cooperative play method for a multimedia file, which includes a process for multiple terminals to establish a play group.

Referring to FIG. 8-a, a specific procedure in which multiple terminals establish a play group may include:
801a: When a master cooperative player client is being started, the master cooperative player client automatically synchronizes a clock to that of an NTP server; when a slave cooperative player client is being started, the slave cooperative player client automatically synchronizes a clock to that of the NTP server.
802: The master cooperative player client creates a play group, sends a cooperative play request to an ESG, where the cooperative play request is specifically a play group creation request, and adds geographic position information into the play group creation request.

The physical address information may be obtained by using a positioning system, such as the global positioning system, the Galileo positioning system, the global navigation satellite system, or the BeiDou navigation satellite system.

803: After receiving the play group creation request, the ESG forwards the play group creation request to a play group management device.

804: The play group management device creates a play group, and allocates a relative play position to the master cooperative player, where that the play group management device totally sets 16 relative play positions is used as an example for description.

805: The play group management device returns a cooperative play identifier (which is specifically a play group ID) and the relative play position to the ESG.

806: The ESG forwards the play group ID and the relative play position to the master cooperative player client.

807: The slave cooperative play client participates in a cooperative play, and initiates a cooperative play joining request (which is specifically a play group joining request) to the ESG, which may specifically be that the slave cooperative play client joins the cooperative play by "shaking" the mobile phone terminal, or "touching" the mobile phone terminal, or through direct application, or that the slave cooperative play client obtains the cooperative play identifier of the master cooperative player client by using an NFC chip, where the cooperative play identifier is specifically the play group ID, and the play group joining request carries the geographic position information that is obtained through the GPS.

808: The ESG forwards the play group joining request to the play group management device.

809: The play group management device allocates a relative play position to the slave cooperative player client according to the geographic position information of the slave cooperative player client and the play group ID, and the play group management device records user information in the group.

810: The play group management device returns the relative play position to the ESG.

811: The ESG forwards the relative play position to the slave cooperative player client.

Referring to FIG. 8-b, another specific procedure in which multiple terminals establish a play group may include:

801b: When a master cooperative player client is being started, and a slave cooperative player approaches a master cooperative player, the master cooperative player may send clock information of the master cooperative player to the slave cooperative player by using an NFC chip, so that the slave cooperative player adjusts a clock of the slave cooperative player to be synchronized with a clock of the master cooperative player.

Descriptions in 802 to 806 are the same as descriptions in the foregoing embodiment.

806s: The master cooperative player may send a cooperative play identifier (which is specifically a play group number) to the slave cooperative player by using the NFC chip.

Descriptions in 807 to 811 are the same as descriptions in the foregoing embodiment.

In an implementation process of establishing a play group by multiple terminals, information used by the master cooperative player client to create the play group in step 802 may specifically be the description of a play group creation field in information 1.1; information used by the play group management device to return the play group ID and the relative play position to the ESG in step 805 is specifically the description of an object definition returning field in information 1.1.

Information 1.1 may specifically be:
CreatePlayGroup(float latitude, float longitude)//play group creation;

| **Field** | | **Type** | **Length** | **Description** |
|---|---|---|---|---|
| latitude | Necessary | Float | 4 | The latitude uses the world geodetic system |
| longitude | Mandatory | Float | 4 | The longitude uses the world geodetic system |

CreateGroupResp //returned object definition of play group creation;

| **Name of type** | **Member name** | **Whether to be blank** | **Type** | **Description** |
|---|---|---|---|---|
| eGroupResp | GroupID | Negative | DWORD | Play group ID |
| | Position | Negative | DWORD | Relative play positions (from 1, ..., to 16) |
| | ReturnCode | Negative | DWORD | Returned result: 0 indicates success; Others indicate failure. |

In an implementation process of establishing a play group by multiple terminals, information used by the slave cooperative play client to initiate the play group joining request to the ESG in step 807 may specifically be the description of a play group joining field in information 1.2; information used by the play group management device to return the play group ID and the relative play position to the ESG in step 810 is specifically the description of an object definition returning field in information 1.2.

Information 1.2:
JoinGroupResp JoinPlayGroup(float latitude, float longitude, DWORD GroupID)//play group joining;

| **Field** | | **Type** | **Length** | **Description** |
|---|---|---|---|---|
| latitude | Necessary | Float | 4 | The latitude uses the world geodetic system |
| longitude | Mandatory | Float | 4 | The longitude uses the world geodetic system |
| GroupID | Optional | DWORD | 4 | Play group ID |

JoinGroupResp //returned object definition;

| **Name of type** | **Member name** | **Whether to be blank** | **Type** | **Description** |
|---|---|---|---|---|
| JoinGroupResp | GroupID | Negative | DWORD | Play group ID |
| | Position | Negative | DWORD | Relative play positions (from 1, ..., to 16) |
| | ReturnCode | Negative | DWORD | Returned result: |
| | | | | 0 indicates success; |
| | | | | Others: 1 indicates that the group does not exist; |
| | | | | 2 indicates that the group is full (the number of members is greater than 16). |

The following describes, by using an example, a procedure of a multi-terminal cooperative play method for a multimedia file, which includes a process of implementing a cooperative play for a music file in a play group.

Referring to FIG. 9, a specific process of implementing a cooperative play for a music file in a play group may include:
901: A master cooperative player functions as an initiator; a song synchronization button is clicked in a client, and the client sends a music file list request to an ESG, and adds information of a user ID and a play group ID of the master cooperative player into the music file list request.
902: The ESG forwards the music file list request to a CMS.
903: The CMS returns, to the ESG according to the user ID, a music file list owned by a user and a download address of corresponding music.
904: After receiving the music file list and the download address of the corresponding music, the ESG forwards the music file list to the master cooperative player client.
905: The master cooperative player client generates a play list according to the music file list, and sends the play list to the ESG.
906: The ESG forwards the play list and the play group ID to the play group management device.
907: The play group management device searches for group members according to the play group ID, and sends a member list, the play list, and the corresponding download address to an IM server.
908: The IM server sends the play list and download address information to the slave cooperative player client.
909: After receiving the play list and the download address information, the slave cooperative player client downloads music content and a light effect display file from the CMS.
910: After completing the content download, the slave cooperative player client submits a completion notification to the IM server.
911: The IM server feeds back the completion notification to the master cooperative player client.
912: The master cooperative player client delivers a play command to the IM server, where the play command carries start time of a designated play, music content of the designated play, and the light effect display file.
913: The IM server forwards the play command to the slave cooperative player.
914: When the start time of the designated play arrives, the master cooperative player and the slave cooperative player synchronously play the music content in their respective relative play positions, and present a light effect.

In a process of implementing a cooperative play for a music file in a play group, a request message format used by the master cooperative player client to send a music file list request to the ESG in step 901 may specifically be the description of a music file list obtaining field in information 2.1; and information used by the CMS to return the music file list owned by the user and a download address of corresponding music to the ESG according to the user ID in step 903 may specifically be the description of an object definition returning field in information 2.1.

Information 2.1 may specifically be:
GetPlayListResp GetPlayList(DWORD dwUserID)//obtain a music file list of a user;

| **Field** | | **Type** | **Length** | **Description** |
|---|---|---|---|---|
| dwUserID | Necessary | DWORD | 4 | User ID: obtain the music file list according to the user ID |

GetPlayListResp //returned object definition of music file list obtaining

| **Name of type** | **Member name** | **Whether to be blank** | **Type** | **Description** |
|---|---|---|---|---|
| GetPlay ListResp | ReturnCode | Negative | DWORD | Returned result: |
| | | | | 0 indicates success; others indicate failure; |
| | | | | 1 indicates that no user exists; |
| | Num | Negative | DWORD | The number of songs (from 1, ..., to 16) |
| | SongList | Negative | CHAR (1024) | An ID of a song has 18 bits, the first six bits of the song ID are SP codes; and others are song codes and reserved bits. |

In the process of implementing a cooperative play for a music file in a play group, information used by the master cooperative player client to generate the play list according to the music file list in step 905 may specifically be the description of a play list generation field in information 2.2; and information 2.2 may specifically be:
SetPlayList(DWORD GroupID, PLAYLIST list)//set a current play list;

| **Field** | | **Type** | **Length** | **Description** |
|---|---|---|---|---|
| GroupID | Necessary | DWORD | 4 | Play group ID |
| List | Necessary | PLAYLIST | 1024 | Play list |

| **Name of type** | **Member name** | **Whether to be blank** | **Type** | **Description** |
|---|---|---|---|---|
| PLAY LIST | Num | Negative | DWORD | The number of songs (from 1, ..., to 16) |
| | SongList | Negative | CHAR (1024) | An ID of a song has 18 bits, the first six bits of the song ID are SP codes; and others are song codes and reserved bits. |

In a process of implementing a cooperative play for a music file in a play group, information used by the slave cooperative player client to download music content and a light effect display file from the CMS in step 909 may specifically be the description of a single song information obtaining field in information 2.3; information used by the song file and the light effect display file that are returned to the slave cooperative player by the CMS may specifically be the description of an object definition returning field in information 2.3; information used by the master cooperative player client to deliver the play command to the IM server in step 912 may specifically be the description of a group play command generation field in information 2.3; and information 2.3 may specifically be:
GetSongInfoResp GetSongInfo(SongID)//obtain information of a single song, including a download address and an address of the light effect display file;

| **Field** | | **Type** | **Length** | **Description** |
|---|---|---|---|---|
| SongID | Necessary | String | 18 | Song code |

GetSongInfoResp //returned object definition;

| **Name of type** | **Member name** | **Whether to be blank** | **Type** | **Description** |
|---|---|---|---|---|
| GetSong InfoResp | ReturnCode | Negative | DWORD | Returned result: |
| | | | | 0 indicates success; others indicate failure; |
| | | | | 1 indicates that no song exists; |
| | SongName | Negative | String (255) | Song name |
| | SongAddress | Negative | String (255) | Download address of a song |

GroupPLAY(DWORD groupID, TIME time)//group play command

| **Field** | | **Type** | **Length** | **Description** |
|---|---|---|---|---|
| GROUPID | Necessary | DWORD | 4 | Play group; |
| TIME | Necessary | TIME | 8 | Play time; |

In another application scenario, an example is used to describe that multi-terminal cooperative player presents a play effect during the cooperative play for a multimedia file; and the following uses the light effect as an example for description.

Before the cooperative play, the cooperative player reads a light effect file according to a designated play channel, and performs presentation by time according to the indication of the light effect file.

The format of the light effect file may specifically be as follows:

```
CEffectFileHead
           {
              CHAR FILEID [10]; //file header identifier
              INT nChannelNum; //the number of play channels, corresponding to actual voice
 channels;
              CPlayChannel * pChannel; // channel array
           }
           CPlayChannel
           {
              CHAR nChannelID;//channel ID, corresponding to an actual channel;
              INT nEffectNum;// the effect number of the channels;
              CEffect * pEffect; //effect queue array
           }
           CEffect
           {
             INT nStartTime ; //start time, relative play start time, in a unit of second;
             INT nDuration;//duration;
             RGB nColorl; //color 1;
             RGB nColor2; //color 2;
             Enum nEffect; // effect indication
           }
```

Enum {SINGLE, MIX, SHINE} // single indicates that only the first color is displayed; MIX indicates that two colors are displayed alternately at an interval of one second; and SHINE indicates that two colors are displayed alternately at an interval of 200 ms.

The following uses a specific application scenario as another example.

S01: Cooperative player A functions as an initiator of a cooperative play; cooperative player A has a music subscription relationship in a CMS system; upon being started, cooperative player A automatically synchronizes a clock to that of an NTP server; upon being started, cooperative player B automatically synchronizes a clock to that of the NTP server; upon being started, cooperative player C automatically synchronizes a clock to that of the NTP server; and cooperative players B and C function as participants of the cooperative play.

S02: Cooperative player A obtains geographic position information (B1, L1) of cooperative player A by using the GPS, and sends a play group creation request to an ESG; and the ESG forwards the request to a play group management device.

S03: The play group management device allocates a play group ID to cooperative player A, and allocates a relative play position, such as position "1" in FIG. 4-a, to cooperative player A; the play group management device totally sets six relative play positions.

S04: The play group management device returns the play group ID and the relative play position to the ESG, and the ESG forwards the play group ID and the relative play position to the master cooperative player client.

S05: Cooperative player B initiates play group joining request a to the ESG according to the play group ID, and adds geographic position information (B2, L2) of cooperative player B and the play group ID into play group joining request a; cooperative player C initiates play group joining request b to the ESG, and adds physical address information (B3, L3) of cooperative player C and the play group ID into play group joining request b; the ESG forwards both of play group joining requests a and b to the play group management device.

S06: The play group management device allocates a relative play position, such as position "2" in FIG. 4-b, to cooperative player B according to (B2, L2); the play group management device allocates a relative play position, such as position "3" in FIG. 4-a, to cooperative player C according to (B3, L3); and the play group management device records user information in a group.

S07: The play group management device returns relative play position "2" and relative play position "3" to the ESG separately; and the ESG forwards relative play position "2" and relative play position "3" to cooperative player B and cooperative player C respectively.

S08: Cooperative player A functions as an initiator, sends a music file list request to the ESG, and adds information of a user ID and a play group ID of cooperative player A into the music file list request; and the ESG forwards the music file list request to the CMS.

S09: The CMS returns a music file list owned by the user and a download address of corresponding music to the ESG according to the user ID; then the ESG forwards the music file list and the download address to cooperative player A, where the music file list includes all songs owned by the user and corresponding download addresses, which are shown in the following table 2:

**Table 2**

| **Name of a music file** | **Download address** |
|---|---|
| "If only just" | http://www.migu.com/rts/www_p120169_c0_stinfo_r.html |
| "You exist in my song" | http://www.migu.cn/rings/ songid=4586000.html |
| "Everything in the world" | http://www.migu.cn//rings/ songid=2486000.html |

S10: Cooperative player A generates a play list according to the music file list, and sends the play list to the ESG; the ESG forwards the play list to the play group management device, where the play list generated by cooperative player A may specifically be shown in the following table 3:

**Table 3**

| **Play group number** | **Cooperatively played song** |
|---|---|
| Play group ID | "You exist in my song" |

S11: The play group management device finds, according to the play group ID, participants: cooperative player B and cooperative player C, and sends play list 3 and a corresponding download address to the IM server.

S12: The IM server sends table 3 and download address information to both cooperative player B and cooperative player C; cooperative player B and cooperative player C may download, according to http://www.migu.cn/rings/songid=4586000.html, a song, "You exist in my song", which is designated to be played by cooperative player A. In addition, cooperative player B and cooperative player C may also download, by using the CMS, a light effect display file designated by cooperative player A, where cooperative player A may designate that all participants present the same light effect, and may separately designate multiple light effects, for example, cooperative player A designates that two participants present two different light effects, where a light effect presented by one cooperative player is that red light is switched to blue light every one second, and a light effect presented by the other cooperative player is that light of seven colors is switched in sequence every two seconds.

S13: After completing downloading of the song, "You exist in my song" separately, cooperative player B and cooperative player C submit completion notifications to the IM server, and the IM forwards the completion notifications to cooperative player A.

S14: Cooperative player A delivers a play command to the IM server, where the play command carries start time of the designated play being 11:00, music content designated to play being the song, "You exist in my song", and the sound and light effect display file; the IM server forwards the play command to cooperative player B and cooperative player C separately.

S 15: When a time shown in the mobile phone terminal reaches 11:00, cooperative player A, cooperative player B, and cooperative player C synchronously play the music content song in their respective relative play positions, and present the light effect.

It may be understood that, the foregoing examples are only used for describing ideas of solutions of the embodiment of the present invention, a flexible change may be made based on requirements in different application scenarios, which is not limited to the foregoing exemplary forms.

As can be seen from the foregoing multiple embodiments, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

It should be noted that, to simplify the description, the aforementioned method embodiments are described as a series of action combinations. However, persons skilled in the art should know that the present invention is not limited to any sequence of the actions in the descriptions because some steps can be performed in other sequences or simultaneously according to the present invention. Secondarily, persons skilled in the art should also know that the embodiments described in the specification all belong to exemplary embodiments and the involved actions and modules are not necessary for the present invention.

For the convenience of better implementing the foregoing solutions of the embodiments of the present invention, the following further provides related apparatuses configured to implement the foregoing solutions.

Referring to FIG. 10-a, an embodiment of the present invention provides a master cooperative player applied to a multi-terminal cooperative play system. The master cooperative player 1000 includes: a request sending module 1001, a receiving module 1002, a file information sending module 1003, a command sending module 1004, and a cooperative play module 1005, where:
the request sending module 1001 is configured to send a cooperative play request to a play group management device;
the receiving module 1002 is configured to receive a cooperative play identifier and play position information that are sent by the play group management device according to the cooperative play request;
the file information sending module 1003 is configured to send multimedia file information to the play group management device, so that a slave cooperative player joining a cooperative play according to the cooperative play identifier obtains the multimedia file information from the play group management device;
the command sending module 1004 is configured to send a play command to the slave cooperative player, where the play command includes start time of the cooperative play, so that the slave cooperative player plays, at the start time of the cooperative play and in a position that corresponds to play position information allocated to the slave cooperative player by the play group management device, a multimedia file corresponding to the multimedia file information; and
the cooperative play module 1005 is configured to play, at the start time of the cooperative play and in a position that corresponds to the play position information allocated to the master cooperative player by the play group management device, the multimedia file corresponding to the multimedia file information.

In some embodiments of the present invention, the request sending module 1001 is specifically configured to send the cooperative play request to an electronic service guide apparatus ESG, where the cooperative play request carries geographic position information of the master cooperative player, so that the ESG forwards the cooperative play request to the play group management device, and the play group management device allocates the cooperative play identifier and the play position information to the master cooperative player according to the geographic position information of the master cooperative player; and
the receiving module 1002 is specifically configured to receive the cooperative play identifier and the play position information that are forwarded by the ESG and are allocated to the master cooperative player by the play group management device.

In some embodiments of the present invention, as shown in FIG. 10-b, the master cooperative player 1000 further includes:
a file request sending module 1006, configured to send a multimedia file request to the ESG, where the multimedia file request carries an identity ID of the master cooperative player, so that the ESG forwards the multimedia file request to a content management system CMS, and the CMS generates, according to the ID of the master cooperative player, the multimedia file information and a download address of the multimedia file corresponding to the multimedia file information, where the CMS is configured to manage multimedia file subscription relationships of cooperative players and a download address corresponding to a subscribed multimedia file;
a download address receiving module 1007, configured to receive the multimedia file information and the download address of the multimedia file corresponding to the multimedia file information that are forwarded to the ESG by the CMS; and
a file downloading module 1008, configured to download, from the CMS according to the download address of the multimedia file corresponding to the multimedia file information, the multimedia file corresponding to the multimedia file information.

In some embodiments of the present invention, as shown in FIG. 10-c, the master cooperative player 1000 further includes:
a clock synchronization module 1009, configured to enable the master cooperative player to keep clock synchronization with the slave cooperative player.

Specifically, the clock synchronization module 1009 is specifically configured to synchronize a clock of the master cooperative player to a network time protocol NTP server, so that when receiving a clock synchronization request sent by the slave cooperative player, the NTP server sends clock information of the NTP server to the slave cooperative player; or send clock information of the master cooperative player to the slave cooperative player by using a near field communication NFC chip, so that the slave cooperative player adjusts, according to the clock information, a clock of the slave cooperative player to be synchronized with a clock of the master cooperative player.

In addition, in some embodiments of the present invention, the command sending module 1004 is specifically configured to send the play command to an instant messaging IM server, so that the IM server forwards the play command to the slave cooperative player; or send the play command to the slave cooperative player by using a short message service message.

In addition, in some embodiments of the present invention, as shown in FIG. 10-d, the master cooperative player 1000 further includes:
an identifier forwarding module 1010, configured to send the cooperative play identifier to the slave cooperative player by using the NFC chip, so that the slave cooperative player joins the cooperative play according to the cooperative play identifier; or send the cooperative play identifier to the IM server, so that the IM server forwards the cooperative play identifier to the slave cooperative player.

In some embodiments of the present invention, the cooperative play request further carries display effect information, where the display effect information is used to cause the slave cooperative player to present a play and display effect corresponding to the display effect information; and
the cooperative play module 1005 is further configured to: when displaying the multimedia file corresponding to the multimedia file information, present the play and display effect corresponding to the display effect information.

Referring to FIG. 11-a, a play group management device 1100 provided in an embodiment of the present invention is applied to a multi-terminal cooperative play system, and includes: a master cooperative allocation module 1101, a master cooperative sending module 1102, a slave cooperative allocation module 1103, a slave cooperative sending module 1104, a file information receiving module 1105, and a file information forwarding module 1106, where:
the master cooperative allocation module 1101 is configured to allocate a cooperative play identifier and play position information to a master cooperative player according to a cooperative play request sent by the master cooperative player;
the master cooperative sending module 1102 is configured to send, to the master cooperative player, the cooperative play identifier and the play position information that are allocated to the master cooperative player;
the slave cooperative allocation module 1103 is configured to allocate play position information to a slave cooperative player according to a cooperative play joining request sent by the slave cooperative player, where the cooperative play joining request carries a cooperative play identifier of a play group that the slave cooperative player needs to join;
the slave cooperative sending module 1104 is configured to send, to the slave cooperative player, the play position information allocated to the slave cooperative player;
the file information receiving module 1105 is configured to receive multimedia file information sent by the master cooperative player; and
the file information forwarding module 1106 is configured to send the multimedia file information to the slave cooperative player, so that the slave cooperative player obtains a multimedia file corresponding to the multimedia file information.

In some embodiments of the present invention, referring to FIG. 11-b, the play group management device 1100 further includes: a request receiving module 1107, configured to receive the cooperative play request forwarded by an electronic service guide apparatus ESG, where the cooperative play request is sent to the ESG by the master cooperative player, and the cooperative play request carries geographic position information of the master cooperative player, where
the master cooperative allocation module 1101 is specifically configured to allocate the cooperative play identifier and the play position information to the master cooperative player according to the geographic position information of the master cooperative player; and
the master cooperative sending module 1102 is specifically configured to send, to the ESG, the cooperative play identifier and the play position information that are allocated to the master cooperative player, so that the ESG forwards, to the master cooperative player, the cooperative play identifier and the play position information that are allocated to the master cooperative player.

In some embodiments of the present invention, the cooperative play joining request carries geographic position information of the slave cooperative player, and the slave cooperative allocation module 1103 is specifically configured to allocate, to the slave cooperative player according to the geographic position information of the slave cooperative player, play position information that corresponds to a play manner selected by the master cooperative player.

In some embodiments of the present invention, referring to FIG. 11-c, the cooperative play request further carries display effect information; and
the play group management device 1100 further includes: an effect information forwarding module 1108, configured to send the display effect information to the slave cooperative player, so that the slave cooperative player presents a play and display effect corresponding to the display effect information.

In some embodiments of the present invention, referring to FIG. 11-d, the cooperative play request further carries information of a play manner, where the play manner includes stereo play, stereo array play, and surround sound play; and
the play group management device 1100 further includes a manner information forwarding module 1109, configured to send the information of the play manner to the slave cooperative player, so that the slave cooperative player plays a multimedia file according to the play manner selected by the master cooperative player.

Referring to FIG. 12-a, an embodiment of the present invention provides a slave cooperative player applied to a multi-terminal cooperative play system. The slave cooperative player 1200 includes: an identifier obtaining module 1201, a request sending module 1202, a position information receiving module 1203, a file information receiving module 1204, a command receiving module 1205, and a cooperative play module 1206, where:
the identifier obtaining module 1201 is configured to obtain, by the slave cooperative player, a cooperative play identifier that is allocated to a master cooperative player by a play group management device;
the request sending module 1202 is configured to send a cooperative play joining request to the play group management device according to the cooperative play identifier, where the cooperative play joining request carries a cooperative play identifier of a play group that the slave cooperative player needs to join;
the position information receiving module 1203 is configured to receive play position information that is sent by the play group management device according to the cooperative play joining request;
the file information receiving module 1204 is configured to receive multimedia file information sent by the play group management device;
the command receiving module 1205 is configured to receive a play command sent by the master cooperative player, where the play command includes start time of a cooperative play; and
the cooperative play module 1206 is configured to play, by the slave cooperative player at the start time of the cooperative play and in a position that corresponds to the play position information allocated to the slave cooperative player by the play group management device, a multimedia file corresponding to the multimedia file information.

In some embodiments of the present invention, the identifier obtaining module 1201 is specifically configured to receive, by using an NFC chip, the cooperative play identifier sent by the master cooperative player; or receive the cooperative play identifier sent by an instant messaging IM server, where the cooperative play identifier is sent to the IM server by the master cooperative player.

In addition, in some embodiments of the present invention, the request sending module 1202 is specifically configured to send the cooperative play joining request to an ESG, where the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player; and
the position information receiving module 1203 is specifically configured to receive the play position information that is forwarded by the ESG and is allocated to the slave cooperative player by the play group management device.

In some embodiments of the present invention, as shown in FIG. 12-b, the slave cooperative player 1200 further includes:
a download address obtaining module 1207, configured to obtain, from the multimedia file information, a download address of the multimedia file corresponding to the multimedia file information; and
a file downloading module 1208, configured to download, from a content management system CMS according to the download address of the multimedia file, the multimedia file corresponding to the download address, where the CMS is configured to manage multimedia file subscription relationships of cooperative players and a download address corresponding to a subscribed multimedia file.

In some embodiments of the present invention, the command receiving module 1205 is specifically configured to receive the play command from the IM server, where the play command is sent to the IM server by the master cooperative player; or receive, by using a short message service message, the play command sent by the master cooperative player.

In some embodiments of the present invention, as shown in FIG. 12-c, the slave cooperative player 1200 further includes:
a clock synchronization module 1209, configured to enable the slave cooperative player to perform clock synchronization with the master cooperative player.

Specifically, the clock synchronization module 1209 is further configured to send a clock synchronization request to a network time protocol NTP server, receive clock information of the NTP server sent by the NTP server, and adjust a clock of the slave cooperative player according to the clock information of the NTP server; or receive, by using the NFC chip, clock information sent by the master cooperative player, and adjust, according to the clock information of the master cooperative player, a clock of the slave cooperative player to be synchronized with a clock of the master cooperative player.

In some embodiments of the present invention, referring to FIG. 12-d, if the cooperative play request further carries display effect information, the slave cooperative player 1200 further includes: an effect information receiving module 1210, configured to receive the display effect information sent by the play group management device, so that the slave cooperative player presents a play and display effect corresponding to the display effect information.

In some embodiments of the present invention, referring to FIG. 12-e, if the cooperative play request further carries information of a play manner, where the play manner includes stereo play, stereo array play, and surround sound play, the slave cooperative player 1200 further includes: a manner information receiving module 1211, configured to receive the information of the play manner sent by the play group management device, so that the slave cooperative player plays the multimedia file according to a play manner selected by the master cooperative player.

Referring to FIG. 13, an embodiment of the present invention further provides a multi-terminal cooperative play system 1300, which may include:
the master cooperative player 1000 described from FIG. 10-a to FIG. 10-d, the play group management device 1100 described from FIG. 11-a to FIG. 11-d, and at least one slave cooperative player 1200 described from FIG. 12-a to FIG. 12-e.

As can be known from the foregoing embodiments, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

The following introduces another master cooperative player applied to a multi-terminal cooperative play system according to an embodiment of the present invention. Referring to FIG. 14, the master cooperative player 1400 includes:
an input apparatus 1401, an output apparatus 1402, a processor 1403, and a memory 1404 (the number of processors 1403 in the master cooperative player 1400 may be one or more than one, and one processor is used as an example in FIG. 14). In some embodiments of the present invention, the input apparatus 1401, the output apparatus 1402, the processor 1403, and the memory 1404 may be connected by using a bus or in another manner. Connection by using a bus is used as an example in FIG. 14.

The input apparatus 1401 is configured to receive input information of a user; the output apparatus 1402 is configured to present output information under control of the processor 1403, where the output information may include voices, characters, pictures, videos, and the like.

The input apparatus 1401 may include a touch screen, a gesture identification input apparatus, a scenario sensing input apparatus, a keyboard, a mouse, a microphone, and the like. The output apparatus 1402 may include a display, a loudspeaker, a projection apparatus, and the like.

The memory 1404 is configured to store user data and program code.

The processor 1403 is configured to execute the program code stored in the memory 1404, so as to process input information that is input by a user by using the input apparatus 1401, or the user data stored in the memory 1404 to generate output information to be output by the output apparatus 1402.

The master cooperative player 1400 further includes:
a sender, configured to send a cooperative play request to a play group management device under control of the processor 1403; and
a receiver, configured to receive, under control of the processor 1403, a cooperative play identifier and play position information that are sent by the play group management device according to the cooperative play request, where
the sender is further configured to send multimedia file information to the play group management device under control of the processor 1403, so that a slave cooperative player joining a cooperative play according to the cooperative play identifier obtains the multimedia file information from the play group management device;
the sender is further configured to send a play command to the slave cooperative player under control of the processor 1403, where the play command includes start time of the cooperative play, so that the slave cooperative player plays, at the start time of the cooperative play and in a position that corresponds to play position information allocated to the slave cooperative player by the play group management device, a multimedia file corresponding to the multimedia file information; and
the processor 1403 is configured to execute the program code stored in the memory, so as to decode, at the start time of the cooperative play, the multimedia file corresponding to the multimedia file information to generate decoded information; and control the output apparatus 1401 to play, according to the decoded information and in a position that corresponds to play position information allocated to the master cooperative player by the play group management device, the multimedia file corresponding to the multimedia file information.

In some embodiments of the present invention, when the sender sends the cooperative play request to the play group management device under control of the processor 1403, the sender is specifically configured to execute the following step:
sending the cooperative play request to an electronic service guide apparatus ESG, where the cooperative play request carries geographic position information of the master cooperative player, so that the ESG forwards the cooperative play request to the play group management device, and the play group management device allocates a cooperative play identifier and play position information to the master cooperative player according to the geographic position information of the master cooperative player.

When the receiver receives, under control of the processor 1403, the cooperative play identifier and the play position information that are sent by the play group management device according to the cooperative play request, the receiver is specifically configured to execute the following step: receiving the cooperative play identifier and the play position information that are forwarded by the ESG and are allocated to the master cooperative player by the play group management device.

In some embodiments of the present invention, the sender is further configured to execute the following step under control of the processor 1403:
sending a multimedia file request to the ESG, where the multimedia file request carries an identity ID of the master cooperative player, so that the ESG forwards the multimedia file request to a content management system CMS, and the CMS generates, according to the ID of the master cooperative player, the multimedia file information and a download address of the multimedia file corresponding to the multimedia file information, where the CMS is configured to manage multimedia file subscription relationships of cooperative players and a download address corresponding to a subscribed multimedia file;

The receiver is further configured to execute the following steps under control of the processor 1403: receiving the multimedia file information and the download address of the multimedia file corresponding to the multimedia file information that are forwarded to the ESG by the CMS; and
downloading, from the CMS according to the download address of the multimedia file corresponding to the multimedia file information, the multimedia file corresponding to the multimedia file information.

In some embodiments of the present invention, the processor 1403 is further configured to execute the following step:
performing clock synchronization with the slave cooperative player.

In some embodiments of the present invention, the processor 1403 is specifically configured to execute the following step:
synchronizing a clock of the master cooperative player to that of a network time protocol NTP server, so that when receiving a clock synchronization request sent by the slave cooperative player, the NTP server sends clock information of the NTP server to the slave cooperative player; or
sending clock information of the master cooperative player to the slave cooperative player by using a near field communication NFC chip, so that the slave cooperative player adjusts, according to the clock information of the master cooperative player, a clock of the slave cooperative player to be synchronized with a clock of the master cooperative player.

In some embodiments of the present invention, when the sender sends the play command to the slave cooperative player under control of the processor 1403, the sender is specifically configured to execute the following step:
sending the play command to an instant messaging IM server, so that the IM server forwards the play command to the slave cooperative player; or
sending the play command to the slave cooperative player by using a short message service message.

In some embodiments of the present invention, the sender is further configured to execute the following step under control of the processor 1403:
sending the cooperative play identifier to the slave cooperative player by using the NFC chip, so that the slave cooperative player joins the cooperative play according to the cooperative play identifier; or
sending the cooperative play identifier to the IM server, so that the IM server forwards the cooperative play identifier to the slave cooperative player.

In some embodiments of the present invention, the cooperative play request further carries display effect information, where the display effect information is used to cause the slave cooperative player to present a play and display effect corresponding to the display effect information; and
the processor 1403 is further configured to execute the following step:
presenting the play and display effect corresponding to the display effect information.

The following introduces another play group management device according to an embodiment of the present invention, which is applied to a multi-terminal cooperative play system. Referring to FIG. 15, the play group management device 1500 includes:
a processor 1501 and a memory 1502 (the number of processors 1501 in the play group management device 1500 may be one or more than one, and one processor is used as an example in FIG. 15). In some embodiments of the present invention, the processor 1501 and the memory 1502 may be connected by using a bus or in another manner. Connection by using a bus is used as an example in FIG. 15.

The memory 1502 is configured to store data and program code.

The processor 1501 is configured to execute the program code stored in the memory and the data stored in the memory.

When executing the program code, the processor 1501 is configured to execute the following steps:
allocating a cooperative play identifier and play position information to a master cooperative player according to a cooperative play request sent by the master cooperative player;
sending, to the master cooperative player, the cooperative play identifier and the play position information that are allocated to the master cooperative player;
allocating play position information to a slave cooperative player according to a cooperative play joining request sent by the slave cooperative player, where the cooperative play joining request carries a cooperative play identifier of a play group that the slave cooperative player needs to join;
sending, to the slave cooperative player, the play position information allocated to the slave cooperative player;
receiving multimedia file information sent by the master cooperative player; and
sending the multimedia file information to the slave cooperative player, so that the slave cooperative player obtains a multimedia file corresponding to the multimedia file information.

In some embodiments of the present invention, the processor 1501 is further configured to execute the following steps:
receiving the cooperative play request forwarded by an electronic service guide apparatus ESG, where the cooperative play request is sent to the ESG by the master cooperative player, and the cooperative play request carries geographic position information of the master cooperative player;
allocating the cooperative play identifier and the play position information to the master cooperative player according to the geographic position information of the master cooperative player; and
sending, to the ESG, the cooperative play identifier and the play position information that are allocated to the master cooperative player, so that the ESG forwards, to the master cooperative player, the cooperative play identifier and the play position information that are allocated to the master cooperative player.

In some embodiments of the present invention, the cooperative play joining request carries geographic position information of the slave cooperative player; and
the processor 1501 is further configured to execute the following step:
allocating, to the slave cooperative player according to the geographic position information of the slave cooperative player, play position information that corresponds to a play manner selected by the master cooperative player.

In some embodiments of the present invention, the processor 1501 is further configured to execute the following step:
sending the display effect information to the slave cooperative player, so that the slave cooperative player presents a play and display effect corresponding to the display effect information.

In some embodiments of the present invention, the cooperative play request further carries information of a play manner, where the play manner includes stereo play, stereo array play, and surround sound play; and
the processor 1501 is further configured to execute the following step:
sending the information of the play manner to the slave cooperative player, so that the slave cooperative player plays the multimedia file according to the play manner selected by the master cooperative player.

The following introduces another slave cooperative player applied to a multi-terminal cooperative play system according to an embodiment of the present invention. Referring to FIG. 16, the slave cooperative player 1600 includes:
an input apparatus 1601, an output apparatus 1602, a processor 1603, and a memory 1604 (the number of processors 1603 in the slave cooperative player 1600 may be one or more than one, and one processor is used as an example in FIG. 16). In some embodiments of the present invention, the input apparatus 1601, the output apparatus 1602, the processor 1603, and the memory 1604 may be connected by using a bus or in another manner. Connection by using a bus is used as an example in FIG. 16.

The input apparatus 1601 is configured to receive input information of a user; the output apparatus 1602 is configured to present output information under control of the processor 1603, where the output information may include voices, characters, pictures, videos, and the like.

The input apparatus 1601 may include a touch screen, a gesture identification input apparatus, a scenario sensing input apparatus, a keyboard, a mouse, a microphone, and the like. The output apparatus 1602 may include a display, a loudspeaker, a projection apparatus, and the like.

The memory 1604 is configured to store user data and program code.

The processor 1603 is configured to execute the program code stored in the memory 1604, so as to process input information that is input by a user by using the input apparatus 1601, or the user data stored in the memory 1604 to generate output information to be output by the output apparatus 1602.

The slave cooperative player 1600 further includes: a sender and a receiver, where
the receiver is configured to obtain a cooperative play identifier allocated to a master cooperative player by a play group management device;
the sender is configured to send, under control of the processor 1603 and according to the cooperative play identifier, a cooperative play joining request to the play group management device, where the cooperative play joining request carries a cooperative play identifier of a play group that the slave cooperative player needs to join;
the receiver is further configured to receive, under control of the processor 1603, play position information that is sent by the play group management device according to the cooperative play joining request; receive multimedia file information sent by the play group management device; and receive a play command sent by the master cooperative player, where the play command includes start time of a cooperative play; and
the processor 1603 is configured to execute the program code stored in the memory, so as to decode, at the start time of the cooperative play, the multimedia file corresponding to the multimedia file information to generate decoded information; and control the output apparatus to play, according to the decoded information and in a position that corresponds to play position information allocated to the slave cooperative player by the play group management device, the multimedia file corresponding to the multimedia file information.

In some embodiments of the present invention, when the receiver obtains, under control of the processor 1603, the cooperative play identifier allocated to the master cooperative player by the play group management device, the receiver is specifically configured to execute the following step:
receiving, by using a near field communication NFC chip, the cooperative play identifier sent by the master cooperative player; or
receiving the cooperative play identifier sent by an instant messaging IM server, where the cooperative play identifier is sent to the IM server by the master cooperative player.

In some embodiments of the present invention, when the sender sends the cooperative play joining request to the play group management device according to the cooperative play identifier and under control of the processor 1603, the sender is specifically configured to execute the following steps:
sending the cooperative play joining request to an ESG, where the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player; and
receiving the play position information that is forwarded by the ESG and is allocated to the slave cooperative player by the play group management device.

In some embodiments of the present invention, the processor 1603 is further configured to execute the following steps:
obtaining, from the multimedia file information, a download address of the multimedia file corresponding to the multimedia file information; and
downloading, from a content management system CMS according to the download address of the multimedia file, the multimedia file corresponding to the download address, where the CMS is configured to manage multimedia file subscription relationships of cooperative players and a download address corresponding to a subscribed multimedia file.

In some embodiments of the present invention, when the receiver receives, under control of the processor 1603, the play command sent by the master cooperative player, the receiver is specifically configured to execute the following step:
receiving the play command from the IM server, where the play command is sent to the IM server by the master cooperative player; or
receiving, by using a short message service message, the play command sent by the master cooperative player.

In some embodiments of the present invention, the processor 1603 is further configured to execute the following step:
performing clock synchronization with the master cooperative player.

In some embodiments of the present invention, when the sender performs clock synchronization with the master cooperative player under control of the processor 1603, the sender is specifically configured to execute the following step:
sending a clock synchronization request to a network time protocol NTP server, receiving clock information of the NTP server sent by the NTP server, and adjusting a clock of the slave cooperative player according to the clock information of the NTP server; or
when the receiver performs clock synchronization with the master cooperative player under control of the processor 1603, the receiver is specifically configured to execute the following step:
   receiving, by using the NFC chip, clock information sent by the master cooperative player, so that the slave cooperative player adjusts, according to the clock information of the master cooperative player, a clock of the slave cooperative player to be synchronized with a clock of the master cooperative player.

In some embodiments of the present invention, the cooperative play request further carries display effect information; and
the receiver is further configured to execute the following step under control of the processor 1603:
receiving the display effect information sent by the play group management device, so that the slave cooperative player presents a play and display effect corresponding to the display effect information.

In some embodiments of the present invention, the cooperative play request further carries information of a play manner, where the play manner includes stereo play, stereo array play, and surround sound play; and
the receiver is further configured to execute the following step under control of the processor 1603:
receiving the information of the play manner sent by the play group management device, so that the slave cooperative player plays the multimedia file according to a play manner selected by the master cooperative player.

As can be known with reference to the foregoing embodiments, a multi-terminal cooperative play system includes a master cooperative player, a play group management device, and a slave cooperative player. The play group management device allocates a cooperative play identifier and play position information according to a cooperative play request sent by the master cooperative player, and allocates play position information according to a cooperative play joining request sent by the slave cooperative player; the master cooperative player sends multimedia file information to the play group management device; the slave cooperative player obtains the multimedia file information from the play group management device; and the master cooperative player sends a play command to the slave cooperative player, so that the master cooperative player and the slave cooperative player can play, at start time of a cooperative play and in respective play positions allocated to the master cooperative player and the slave cooperative player by the play group management device, a multimedia file corresponding to the multimedia file information, which achieves a stereo effect that multiple terminals play a multimedia file synchronously, and improves experience of a user.

Furthermore, it should be noted that the described apparatus embodiments are merely exemplary. The units described as separate parts may or may not be physically separate, and parts displayed as units may or may not be physical units, may be located in one position, or may be distributed on a plurality of network units. A part or all of the modules may be selected according to an actual need to achieve the objectives of the solutions of the embodiments. In addition, in the accompanying drawings of the apparatus embodiments provided by the present invention, the connection relationship between modules denotes that a communication connection is provided between the modules, and the communication connection may specifically be implemented as one or more communication buses or signal lines. Persons of ordinary skill in the art may understand and implement the embodiments of the present invention without creative efforts.

Based on the foregoing descriptions of the embodiments, persons skilled in the art may clearly understand that the present invention may be implemented by software in addition to necessary universal hardware or by dedicated hardware only. The dedicated hardware includes an application-specific integrated circuit, a dedicated CPU, a dedicated memory, and a dedicated component. In general circumstances, a function that is completed by a computer program can be easily implemented by corresponding hardware, and a same function may be implemented by various specific hardware structures, such as an analog circuit, a digital circuit, or a dedicated circuit. However, for the present invention, a software program is a preferred implementation manner. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, or a network device) to perform the methods described in the embodiments of the present invention.

In conclusion, the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications and replacements do not cause the essence of the present invention to depart from the spirit and scope of the technical solutions of the embodiments of the present invention.

## Claims

1. A multi-terminal cooperative play method for a multimedia file, comprising:
sending, by a master cooperative player, a cooperative play request to a play group management device;
receiving, by the master cooperative player, a cooperative play identifier and play position information that are sent by the play group management device according to the cooperative play request;
sending, by the master cooperative player, multimedia file information to the play group management device, so that a slave cooperative player joining a cooperative play according to the cooperative play identifier obtains the multimedia file information from the play group management device;
sending, by the master cooperative player, a play command to the slave cooperative player, wherein the play command comprises start time of the cooperative play, so that the slave cooperative player plays, at the start time of the cooperative play and in a position that corresponds to play position information allocated to the slave cooperative player by the play group management device, a multimedia file corresponding to the multimedia file information; and
playing, by the master cooperative player at the start time of the cooperative play and in a position that corresponds to the play position information allocated to the master cooperative player by the play group management device, the multimedia file corresponding to the multimedia file information.

2. The method according to claim 1, wherein the sending, by a master cooperative player, a cooperative play request to a play group management device comprises:
sending, by the master cooperative player, the cooperative play request to an electronic service guide apparatus ESG, wherein the cooperative play request carries geographic position information of the master cooperative player, so that the ESG forwards the cooperative play request to the play group management device, and the play group management device allocates the cooperative play identifier and the play position information to the master cooperative player according to the geographic position information of the master cooperative player; and
the receiving, by the master cooperative player, a cooperative play identifier and play position information that are sent by the play group management device according to the cooperative play request comprises:
receiving, by the master cooperative player, the cooperative play identifier and the play position information that are forwarded by the ESG and are allocated to the master cooperative player by the play group management device.

3. The method according to claim 1 or 2, before the sending, by the master cooperative player, multimedia file information to the play group management device, further comprising:
sending, by the master cooperative player, a multimedia file request to the ESG, wherein the multimedia file request carries an identity ID of the master cooperative player, so that the ESG forwards the multimedia file request to a content management system CMS, and the CMS generates, according to the ID of the master cooperative player, the multimedia file information and a download address of the multimedia file corresponding to the multimedia file information, wherein the CMS is configured to manage multimedia file subscription relationships of cooperative players and a download address corresponding to a subscribed multimedia file;
receiving, by the master cooperative player, the multimedia file information and the download address of the multimedia file corresponding to the multimedia file information that are forwarded to the ESG by the CMS; and
downloading, by the master cooperative player from the CMS according to the download address of the multimedia file corresponding to the multimedia file information, the multimedia file corresponding to the multimedia file information.

4. The method according to any one of claims 1 to 3, before the sending, by the master cooperative player, a play command to the slave cooperative player, further comprising:
performing, by the master cooperative player, clock synchronization with the slave cooperative player.

5. The method according to claim 4, wherein the performing, by the master cooperative player, clock synchronization with the slave cooperative player comprises:
synchronizing, by the master cooperative player, a clock of the master cooperative player to a network time protocol NTP server, so that when receiving a clock synchronization request sent by the slave cooperative player, the NTP server sends clock information of the NTP server to the slave cooperative player; or
sending, by the master cooperative player, clock information of the master cooperative player to the slave cooperative player by using a near field communication NFC chip, so that the slave cooperative player adjusts, according to the clock information of the master cooperative player, a clock of the slave cooperative player to be synchronized with a clock of the master cooperative player.

6. The method according to any one of claims 1 to 5, wherein the sending, by the master cooperative player, a play command to the slave cooperative player comprises:
sending, by the master cooperative player, the play command to an instant messaging IM server, so that the IM server forwards the play command to the slave cooperative player; or
sending, by the master cooperative player, the play command to the slave cooperative player by using a short message service message.

7. The method according to any one of claims 1 to 6, after the receiving, by the master cooperative player, a cooperative play identifier and play position information that are sent by the play group management device according to the cooperative play request, further comprising:
sending, by the master cooperative player, the cooperative play identifier to the slave cooperative player by using the NFC chip, so that the slave cooperative player joins the cooperative play according to the cooperative play identifier; or
sending, by the master cooperative player, the cooperative play identifier to the IM server, so that the IM server forwards the cooperative play identifier to the slave cooperative player.

8. The method according to any one of claims 1 to 7, wherein the cooperative play request further carries display effect information, wherein the display effect information is used to cause the slave cooperative player to present a play and display effect corresponding to the display effect information; and
when playing the multimedia file corresponding to the multimedia file information, the master cooperative player further executes the following step:
presenting, by the master cooperative player, the play and display effect corresponding to the display effect information.

9. The method according to any one of claims 1 to 8, wherein the cooperative play request further carries information of a play manner, wherein the play manner comprises stereo play, stereo array play, and surround sound play.

10. The method according to any one of claims 1 to 9, wherein the play position information comprises relative play position information, wherein the relative play position information is information of a placement position of one cooperative player relative to another cooperative player participating in the cooperative play.

11. The method according to any one of claims 1 to 10, wherein the multimedia file information comprises a play list, wherein the play list comprises identities IDs of multiple multimedia files that need to be played cooperatively; and
the play command further carries an ID of a multimedia file that is designated to play in the play list, and play time of the multimedia file that is designated to play.

12. A multi-terminal cooperative play method for a multimedia file, comprising:
allocating, by a play group management device, a cooperative play identifier and play position information to a master cooperative player according to a cooperative play request sent by the master cooperative player;
sending, by the play group management device to the master cooperative player, the cooperative play identifier and the play position information that are allocated to the master cooperative player;
allocating, by the play group management device, play position information to a slave cooperative player according to a cooperative play joining request sent by the slave cooperative player, wherein the cooperative play joining request carries a cooperative play identifier of a play group that the slave cooperative player needs to join;
sending, by the play group management device to the slave cooperative player, the play position information allocated to the slave cooperative player;
receiving, by the play group management device, multimedia file information sent by the master cooperative player; and
sending, by the play group management device, the multimedia file information to the slave cooperative player, so that the slave cooperative player obtains a multimedia file corresponding to the multimedia file information.

13. The method according to claim 12, before the allocating, by a play group management device, a cooperative play identifier and play position information to a master cooperative player according to a cooperative play request sent by the master cooperative player, further comprising:
receiving, by the play group management device, the cooperative play request forwarded by an electronic service guide apparatus ESG, wherein the cooperative play request is sent to the ESG by the master cooperative player, and the cooperative play request carries geographic position information of the master cooperative player;
the allocating, by a play group management device, a cooperative play identifier and play position information to a master cooperative player according to a cooperative play request sent by the master cooperative player is specifically:
allocating, by the play group management device, the cooperative play identifier and the play position information to the master cooperative player according to the geographic position information of the master cooperative player; and
the sending, by the play group management device to the master cooperative player, the cooperative play identifier and the play position information that are allocated to the master cooperative player comprises:
sending, by the play group management device to the ESG, the cooperative play identifier and the play position information that are allocated to the master cooperative player, so that the ESG forwards, to the master cooperative player, the cooperative play identifier and the play position information that are allocated to the master cooperative player.

14. The method according to claim 12 or 13, wherein the cooperative play joining request carries geographic position information of the slave cooperative player, and the allocating, by the play group management device, play position information to a slave cooperative player according to a cooperative play joining request sent by the slave cooperative player comprises:
allocating, by the play group management device to the slave cooperative player according to the geographic position information of the slave cooperative player, play position information that corresponds to a play manner selected by the master cooperative player.

15. The method according to any one of claims 12 to 14, wherein if the cooperative play request further carries display effect information, after the allocating, by the play group management device, play position information to a slave cooperative player according to a cooperative play joining request sent by the slave cooperative player, the method further comprises:
sending, by the play group management device, the display effect information to the slave cooperative player, so that the slave cooperative player presents a play and display effect corresponding to the display effect information.

16. The method according to any one of claims 12 to 15, wherein if the cooperative play request further carries information of a play manner, wherein the play manner comprises stereo play, stereo array play, and surround sound play,
after the allocating, by the play group management device, play position information to a slave cooperative player according to a cooperative play joining request sent by the slave cooperative player, the method further comprises:
sending, by the play group management device, the information of the play manner to the slave cooperative player, so that the slave cooperative player plays the multimedia file according to the play manner selected by the master cooperative player.

17. The method according to any one of claims 12 to 16, wherein the play position information of the master cooperative player comprises relative play position information, wherein the relative play position information is information of a placement position of one cooperative player relative to another cooperative player participating in the cooperative play.

18. A multi-terminal cooperative play method for a multimedia file, comprising:
obtaining, by a slave cooperative player, a cooperative play identifier that is allocated to a master cooperative player by a play group management device;
sending, by the slave cooperative player, a cooperative play joining request to the play group management device according to the cooperative play identifier, wherein the cooperative play joining request carries a cooperative play identifier of a play group that the slave cooperative player needs to join;
receiving, by the slave cooperative player, play position information that is sent by the play group management device according to the cooperative play joining request;
receiving, by the slave cooperative player, multimedia file information sent by the play group management device;
receiving, by the slave cooperative player, a play command sent by the master cooperative player, wherein the play command comprises start time of a cooperative play; and
playing, by the slave cooperative player at the start time of the cooperative play and in a position that corresponds to the play position information allocated to the slave cooperative player by the play group management device, a multimedia file corresponding to the multimedia file information.

19. The method according to claim 18, wherein the obtaining, by a slave cooperative player, a cooperative play identifier that is allocated to a master cooperative player by a play group management device comprises:
receiving, by the slave cooperative player by using a near field communication NFC chip, the cooperative play identifier sent by the master cooperative player; or
receiving, by the slave cooperative player, the cooperative play identifier sent by an instant messaging IM server, wherein the cooperative play identifier is sent to the IM server by the master cooperative player.

20. The method according to claim 18 or 19, wherein the sending, by the slave cooperative player, a cooperative play joining request to the play group management device according to the cooperative play identifier comprises:
sending, by the slave cooperative player, the cooperative play joining request to an ESG, wherein the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player; and
the receiving, by the slave cooperative player, play position information that is sent by the play group management device according to the cooperative play joining request comprises:
receiving, by the slave cooperative player, the play position information that is forwarded by the ESG and is allocated to the slave cooperative player by the play group management device.

21. The method according to any one of claims 18 to 20, after the receiving, by the slave cooperative player, multimedia file information sent by the play group management device, further comprising:
obtaining, by the slave cooperative player from the multimedia file information, a download address of the multimedia file corresponding to the multimedia file information; and
downloading, by the slave cooperative player from a content management system CMS according to the download address of the multimedia file, the multimedia file corresponding to the download address, wherein the CMS is configured to manage multimedia file subscription relationships of cooperative players and a download address corresponding to a subscribed multimedia file.

22. The method according to any one of claims 18 to 21, wherein the receiving, by the slave cooperative player, a play command sent by the master cooperative player comprises:
receiving, by the slave cooperative player, the play command from the IM server, wherein the play command is sent to the IM server by the master cooperative player; or
receiving, by the slave cooperative player by using a short message service message, the play command sent by the master cooperative player.

23. The method according to any one of claims 18 to 22, before the receiving, by the slave cooperative player, a play command sent by the master cooperative player, further comprising:
performing, by the slave cooperative player, clock synchronization with the master cooperative player.

24. The method according to claim 23, wherein the performing, by the slave cooperative player, clock synchronization with the master cooperative player comprises:
sending, by the slave cooperative player, a clock synchronization request to a network time protocol NTP server, receiving clock information of the NTP server sent by the NTP server, and adjusting a clock of the slave cooperative player according to the clock information of the NTP server; or
receiving, by the slave cooperative player by using the NFC chip, clock information sent by the master cooperative player, and adjusting, by the slave cooperative player according to the clock information of the master cooperative player, a clock of the slave cooperative player to be synchronized with a clock of the master cooperative player.

25. The method according to any one of claims 18 to 24, wherein if the cooperative play request further carries display effect information, after the receiving, by the slave cooperative player, play position information that is sent by the play group management device according to the cooperative play joining request, the method further comprises:
receiving, by the slave cooperative player, the display effect information sent by the play group management device, so that the slave cooperative player presents a play and display effect corresponding to the display effect information.

26. The method according to any one of claims 18 to 25, wherein if the cooperative play request further carries information of a play manner, wherein the play manner comprises stereo play, stereo array play, and surround sound play,
after the receiving, by the slave cooperative player, play position information that is sent by the play group management device according to the cooperative play joining request, the method further comprises:
receiving, by the slave cooperative player, the information of the play manner sent by the play group management device, so that the slave cooperative player plays the multimedia file according to a play manner selected by the master cooperative player.

27. A master cooperative player, which is applied to a multi-terminal cooperative play system and comprises:
a request sending module, configured to send a cooperative play request to a play group management device;
a receiving module, configured to receive a cooperative play identifier and play position information that are sent by the play group management device according to the cooperative play request;
a file information sending module, configured to send multimedia file information to the play group management device, so that a slave cooperative player joining a cooperative play according to the cooperative play identifier obtains the multimedia file information from the play group management device;
a command sending module, configured to send a play command to the slave cooperative player, wherein the play command comprises start time of the cooperative play, so that the slave cooperative player plays, at the start time of the cooperative play and in a position that corresponds to play position information allocated to the slave cooperative player by the play group management device, a multimedia file corresponding to the multimedia file information; and
a cooperative play module, configured to play, at the start time of the cooperative play and in a position that corresponds to the play position information allocated to the master cooperative player by the play group management device, the multimedia file corresponding to the multimedia file information.

28. The master cooperative player according to claim 27, wherein the request sending module is specifically configured to send the cooperative play request to an electronic service guide apparatus ESG, wherein the cooperative play request carries geographic position information of the master cooperative player, so that the ESG forwards the cooperative play request to the play group management device, and the play group management device allocates the cooperative play identifier and the play position information to the master cooperative player according to the geographic position information of the master cooperative player; and
the receiving module is specifically configured to receive the cooperative play identifier and the play position information that are forwarded by the ESG and are allocated to the master cooperative player by the play group management device.

29. The master cooperative player according to claim 27 or 28, wherein the master cooperative player further comprises:
a file request sending module, configured to send a multimedia file request to the ESG, wherein the multimedia file request carries an identity ID of the master cooperative player, so that the ESG forwards the multimedia file request to a content management system CMS, and the CMS generates, according to the ID of the master cooperative player, the multimedia file information and a download address of the multimedia file corresponding to the multimedia file information, wherein the CMS is configured to manage multimedia file subscription relationships of cooperative players and a download address corresponding to a subscribed multimedia file;
a download address receiving module, configured to receive the multimedia file information and the download address of the multimedia file corresponding to the multimedia file information that are forwarded to the ESG by the CMS; and
a file downloading module, configured to download, from the CMS according to the download address of the multimedia file corresponding to the multimedia file information, the multimedia file corresponding to the multimedia file information.

30. The master cooperative player according to any one of claims 27 to 29, wherein the master cooperative player further comprises:
a clock synchronization module, configured to maintain clock synchronization between the master cooperative player and the slave cooperative player.

31. The master cooperative player according to claim 30, wherein the clock synchronization module is specifically configured to synchronize a clock of the master cooperative player to a network time protocol NTP server, so that when receiving a clock synchronization request sent by the slave cooperative player, the NTP server sends clock information of the NTP server to the slave cooperative player; or send clock information of the master cooperative player to the slave cooperative player by using a near field communication NFC chip, so that the slave cooperative player adjusts, according to the clock information, a clock of the slave cooperative player to be synchronized with a clock of the master cooperative player.

32. The master cooperative player according to any one of claims 27 to 31, wherein the command sending module is specifically configured to send the play command to an instant messaging IM server, so that the IM server forwards the play command to the slave cooperative player; or send the play command to the slave cooperative player by using a short message service message.

33. The master cooperative player according to any one of claims 27 to 32, wherein the master cooperative player further comprises:
an identifier forwarding module, configured to send the cooperative play identifier to the slave cooperative player by using the NFC chip, so that the slave cooperative player joins the cooperative play according to the cooperative play identifier; or send the cooperative play identifier to the IM server, so that the IM server forwards the cooperative play identifier to the slave cooperative player.

34. The master cooperative player according to any one of claims 27 to 33, wherein the cooperative play request further carries display effect information, wherein the display effect information is used to cause the slave cooperative player to present a play and display effect corresponding to the display effect information; and
the cooperative play module is further configured to: when displaying the multimedia file corresponding to the multimedia file information, present the play and display effect corresponding to the display effect information.

35. A play group management device, which is applied to a multi-terminal cooperative play system and comprises:
a master cooperative allocation module, configured to allocate a cooperative play identifier and play position information to a master cooperative player according to a cooperative play request sent by the master cooperative player;
a master cooperative sending module, configured to send, to the master cooperative player, the cooperative play identifier and the play position information that are allocated to the master cooperative player;
a slave cooperative allocation module, configured to allocate play position information to a slave cooperative player according to a cooperative play joining request sent by the slave cooperative player, wherein the cooperative play joining request carries a cooperative play identifier of a play group that the slave cooperative player needs to join;
a slave cooperative sending module, configured to send, to the slave cooperative player, the play position information allocated to the slave cooperative player;
a file information receiving module, configured to receive multimedia file information sent by the master cooperative player; and
a file information forwarding module, configured to send the multimedia file information to the slave cooperative player, so that the slave cooperative player obtains a multimedia file corresponding to the multimedia file information.

36. The play group management device according to claim 35, wherein the play group management device further comprises: a request receiving module, configured to receive the cooperative play request forwarded by an electronic service guide apparatus ESG, wherein the cooperative play request is sent to the ESG by the master cooperative player, and the cooperative play request carries geographic position information of the master cooperative player, wherein
the master cooperative allocation module is specifically configured to allocate the cooperative play identifier and the play position information to the master cooperative player according to the geographic position information of the master cooperative player; and
the master cooperative sending module is specifically configured to send, to the ESG, the cooperative play identifier and the play position information that are allocated to the master cooperative player, so that the ESG forwards, to the master cooperative player, the cooperative play identifier and the play position information that are allocated to the master cooperative player.

37. The play group management device according to claim 35 or 36, wherein the cooperative play joining request carries geographic position information of the slave cooperative player, and the slave cooperative allocation module is specifically configured to allocate, to the slave cooperative player according to the geographic position information of the slave cooperative player, play position information that corresponds to a play manner selected by the master cooperative player.

38. The play group management device according to any one of claims 35 to 37, wherein the cooperative play request further carries display effect information; and
the play group management device further comprises:
an effect information forwarding module, configured to send the display effect information to the slave cooperative player, so that the slave cooperative player presents a play and display effect corresponding to the display effect information.

39. The play group management device according to any one of claims 35 to 38, wherein the cooperative play request further carries information of a play manner, wherein the play manner comprises stereo play, stereo array play, and surround sound play; and
the play group management device further comprises:
a manner information forwarding module, configured to send the information of the play manner to the slave cooperative player, so that the slave cooperative player plays the multimedia file according to the play manner selected by the master cooperative player.

40. A slave cooperative player, which is applied to a multi-terminal cooperative play system and comprises:
an identifier obtaining module, configured to obtain, by the slave cooperative player, a cooperative play identifier that is allocated to a master cooperative player by a play group management device;
a request sending module, configured to send a cooperative play joining request to the play group management device according to the cooperative play identifier, wherein the cooperative play joining request carries a cooperative play identifier of a play group that the slave cooperative player needs to join;
a position information receiving module, configured to receive play position information that is sent by the play group management device according to the cooperative play joining request;
a file information receiving module, configured to receive multimedia file information sent by the play group management device;
a command receiving module, configured to receive a play command sent by the master cooperative player, wherein the play command comprises start time of a cooperative play; and
a cooperative play module, configured to play, by the slave cooperative player at the start time of the cooperative play and in a position that corresponds to the play position information allocated to the slave cooperative player by the play group management device, a multimedia file corresponding to the multimedia file information.

41. The slave cooperative player according to claim 40, wherein the identifier obtaining module is specifically configured to receive, by using an NFC chip, the cooperative play identifier sent by the master cooperative player; or receive the cooperative play identifier sent by an instant messaging IM server, wherein the cooperative play identifier is sent to the IM server by the master cooperative player.

42. The slave cooperative player according to claim 40 or 41, wherein the request sending module is specifically configured to send the cooperative play joining request to an ESG, wherein the cooperative play joining request carries geographic position information of the slave cooperative player, so that the ESG forwards the cooperative play joining request to the play group management device, and the play group management device allocates the play position information to the slave cooperative player according to the geographic position information of the slave cooperative player; and
the position information receiving module is specifically configured to receive the play position information that is forwarded by the ESG and is allocated to the slave cooperative player by the play group management device.

43. The slave cooperative player according to any one of claims 40 to 42, wherein the slave cooperative player further comprises:
a download address obtaining module, configured to obtain, from the multimedia file information, a download address of the multimedia file corresponding to the multimedia file information; and
a file downloading module, configured to download, from a content management system CMS according to the download address of the multimedia file, the multimedia file corresponding to the download address, wherein the CMS is configured to manage multimedia file subscription relationships of cooperative players and a download address corresponding to a subscribed multimedia file.

44. The slave cooperative player according to any one of claims 40 to 43, wherein the command receiving module is specifically configured to receive the play command from the IM server, wherein the play command is sent to the IM server by the master cooperative player; or receive, by using a short message service message, the play command sent by the master cooperative player.

45. The slave cooperative player according to any one of claims 40 to 44, wherein the slave cooperative player further comprises: a clock synchronization module, configured to enable the slave cooperative player to perform clock synchronization with the master cooperative player.

46. The slave cooperative player according to claim 45, wherein the clock synchronization module is further configured to send a clock synchronization request to a network time protocol NTP server, receive clock information of the NTP server sent by the NTP server, and adjust a clock of the slave cooperative player according to the clock information of the NTP server; or receive, by using the NFC chip, clock information sent by the master cooperative player, and adjust, according to the clock information of the master cooperative player, a clock of the slave cooperative player to be synchronized with a clock of the master cooperative player.

47. The slave cooperative player according to any one of claims 40 to 46, wherein the cooperative play request further carries display effect information; and
the slave cooperative player further comprises: an effect information receiving module, configured to receive the display effect information sent by the play group management device, so that the slave cooperative player presents a play and display effect corresponding to the display effect information.

48. The slave cooperative player according to any one of claims 40 to 47, wherein the cooperative play request further carries information of a play manner, wherein the play manner comprises stereo play, stereo array play, and surround sound play; and
the slave cooperative player further comprises: a manner information receiving module, configured to receive the information of the play manner sent by the play group management device, so that the slave cooperative player plays the multimedia file according to a play manner selected by the master cooperative player.

49. A multi-terminal cooperative play system, comprising: the master cooperative player according to any one of claims 27 to 34, the play group management device according to any one of claims 35 to 39, and at least one slave cooperative player according to any one of claims 40 to 48.

50. A master cooperative player, which is applied to a multi-terminal cooperative play system and comprises: an input apparatus, an output apparatus, a memory, and a processor, wherein
the input apparatus is configured to receive input information of a user;
the output apparatus is configured to present output information under control of the processor;
the memory is configured to store user data and program code; and
the master cooperative player further comprises:
a sender, configured to send a cooperative play request to a play group management device under control of the processor; and
a receiver, configured to receive, under control of the processor, a cooperative play identifier and play position information that are sent by the play group management device according to the cooperative play request, wherein
the sender is further configured to send multimedia file information to the play group management device under control of the processor, so that a slave cooperative player joining a cooperative play according to the cooperative play identifier obtains the multimedia file information from the play group management device;
the sender is further configured to send a play command to the slave cooperative player under control of the processor, wherein the play command comprises start time of the cooperative play, so that the slave cooperative player plays, at the start time of the cooperative play and in a position that corresponds to play position information allocated to the slave cooperative player by the play group management device, a multimedia file corresponding to the multimedia file information; and
the processor is configured to execute the program code stored in the memory, so as to decode, at the start time of the cooperative play, the multimedia file corresponding to the multimedia file information to generate decoded information; and control the output apparatus to play, according to the decoded information and in a position that corresponds to the play position information allocated to the master cooperative player by the play group management device, the multimedia file corresponding to the multimedia file information.

51. A play group management device, which is applied to a multi-terminal cooperative play system and comprises a memory and a processor, wherein
the memory is configured to store data and program code;
the processor is configured to execute the program code stored in the memory; and
when executing the program code, the processor is specifically configured to execute the following steps:
allocating a cooperative play identifier and play position information to a master cooperative player according to a cooperative play request sent by the master cooperative player;
sending, to the master cooperative player, the cooperative play identifier and the play position information that are allocated to the master cooperative player;
allocating play position information to a slave cooperative player according to a cooperative play joining request sent by the slave cooperative player, wherein the cooperative play joining request carries a cooperative play identifier of a play group that the slave cooperative player needs to join;
sending, to the slave cooperative player, the play position information allocated to the slave cooperative player;
receiving multimedia file information sent by the master cooperative player; and
sending the multimedia file information to the slave cooperative player, so that the slave cooperative player obtains a multimedia file corresponding to the multimedia file information.

52. A slave cooperative player, which is applied to a multi-terminal cooperative play system and comprises: an input apparatus, an output apparatus, a memory, and a processor, wherein
the input apparatus is configured to receive input information of a user;
the output apparatus is configured to present output information under control of the processor;
the memory is configured to store user data and program code; and
the slave cooperative player further comprises: a sender and a receiver, wherein
the receiver is configured to obtain a cooperative play identifier allocated to a master cooperative player by a play group management device;
the sender is configured to send, under control of the processor and according to the cooperative play identifier, a cooperative play joining request to the play group management device, wherein the cooperative play joining request carries a cooperative play identifier of a play group that the slave cooperative player needs to join;
the receiver is further configured to receive, under control of the processor, play position information that is sent by the play group management device according to the cooperative play joining request, receive multimedia file information sent by the play group management device, and receive a play command sent by the master cooperative player, wherein the play command comprises start time of a cooperative play; and
the processor is configured to execute the program code stored in the memory, so as to decode, at the start time of the cooperative play, a multimedia file corresponding to the multimedia file information to generate decoded information; and control the output apparatus to play, according to the decoded information and in a position that corresponds to play position information allocated to the slave cooperative player by the play group management device, the multimedia file corresponding to the multimedia file information.
